(19) Europäisches Patentamt
European Patent Office
Office européen des brevets

(11) EP 4 672 359 A1

# (12) EUROPEAN PATENT APPLICATION

(43) Date of publication:
**31.12.2025 Bulletin 2026/01**

(21) Application number: **24306055.5**

(22) Date of filing: **28.06.2024**

(51) International Patent Classification (IPC):
***H01M 4/136*** *(2010.01)* ***H01M 4/50*** *(2010.01)*
***H01M 4/52*** *(2010.01)* ***H01M 4/62*** *(2006.01)*
***H01M 10/0525*** *(2010.01)*

(52) Cooperative Patent Classification (CPC):
**H01M 4/622; H01M 4/136; H01M 4/502; H01M 4/523; H01M 4/624; H01M 10/0525**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicants:
- **Centre National de la Recherche Scientifique 75016 Paris (FR)**
- **Université de Bordeaux 33000 Bordeaux (FR)**
- **Institut Polytechnique de Bordeaux 33400 Talence (FR)**

(72) Inventors:
- **NUGRAHA, Ivone 33000 BORDEAUX (FR)**
- **OLCHOWKA, Jacob 33140 VILLENAVE D'ORNON (FR)**
- **BROCHON, Cyril 33600 PESSAC (FR)**
- **CLOUTET, Eric 33130 BEGLES (FR)**
- **CROGUENNEC, Laurence 33650 SAINT-SELVE (FR)**

(74) Representative: **Santarelli**
**Tour Trinity**
**1 bis Place de la Défense**
**92400 Courbevoie (FR)**

# (54) AN IONIC AND ELECTRONIC CONDUCTIVE POLYMERIC MATERIAL FOR BATTERIES

(57) The present invention relates to batteries, such as lithium, sodium or zinc batteries. In particular, the present invention relates to an electrode material comprising at least one electroactive material and at least one polymeric material. The invention also relates to an electrode comprising said electrode material and to a battery comprising said electrode.

The invention is also directed to a method of manufacturing said electrode material, the method comprising at least one step of mixing the polymeric material with the electroactive material, thereby obtaining the electrode material, and optionally at least one step of pouring the obtained electrode material on a current collector.

EP 4 672 359 A1

## Description

### FIELD OF THE INVENTION

The present invention relates to batteries. In particular, the present invention relates to an electrode material comprising at least one electroactive material and at least one polymeric material, an electrode comprising said electrode material, a battery comprising said electrode, and a method of manufacturing said electrode material.

### BACKGROUND OF THE INVENTION

It is known that an electrode material of an electrode within batteries comprises generally at least an electroactive material, an electronic conductive additive and a binder.
The electroactive material is the component that undergoes electrochemical reactions during charging and discharging, storing and releasing energy. Common electroactive materials include, for example, lithium metal oxide, sodium metal oxide or graphite.
As mentioned above, in addition to the electroactive material, conventional electrode materials also require the presence of the binder and the electronic conductive additive.
The binder, such as polyvinylidene fluoride (PVDF) which is the most used binder in conventional electrode materials, ensures mechanical integrity within the electrode material by interconnecting the electroactive material and the electronic conductive additive. It provides mechanical stability during charge-discharge cycles, for example by accommodating volume changes during cycling without fracturing. Thus, the binder enhances the durability and flexibility of the electrode. The binder also enables the electrode material to adhere to the current collector. This adhesion is crucial for maintaining a consistent electrical connection and efficient electron transfer.
The electronic conductive additive, such as carbon black, graphene or graphite which are the most used electronic conductive additives in conventional electrode materials, is mixed with the electroactive material to improve the electrochemical performance of the electrode. It increases the electrode's electrical conductivity which facilitates electron mobility. Its presence reduces internal resistance and enhances charge-discharge efficiency. The electronic conductive additive is crucial for maintaining high energy density and conductivity in electrodes.
Although it is necessary to add a binder and an electronic conductive additive to the electroactive material, this usage comes with several disadvantages.
Adding a binder and an electronic conductive additive increases the complexity and the cost of the electrode manufacturing process. It requires additional steps to create a uniform mixture of the electrode material and the use of expensive components, such as PVDF or graphene.
The binder and the conductive additive also take up space within the electrode, which could otherwise be occupied by more electroactive material. Thus, the energy capacity of the battery is reduced.
Some binders or electronic conductive additives may interact negatively with the electroactive material or the electrolyte, leading to an accelerated degradation or a chemical instability of the battery.
The use of a binder may also lead to negative environmental impacts. For example, its presence can inhibit the separation and recovery of electroactive materials in the recycling process. Furthermore, employing PVDF as binder necessitates the use of toxic and environmentally harmful chemicals, such as N-methyl-2-pyrrolidone (NMP) solvent.
Thus, there is a need to develop an electrode material with improved electrochemical and/or mechanical properties.

### INVENTION SUMMARY

The present invention aims to meet this need, and notably to remedy all or some of the above disadvantages of the state of the art.
Specifically, the present invention aims to develop an electrode material with improved electrochemical and/or mechanical properties. More specifically, the present invention aims to improve the energy capacity of batteries.
A first object of the present invention is thus, an electrode material comprising at least one electroactive material and at least one polymeric material, wherein the polymeric material is ionic and electronic conductive.
In a preferred embodiment of the present invention, the polymeric material comprises:

- a polymer A which is ionic conductive and a polymer B which is electronic conductive, the polymer B being different from the polymer A;
- a polymer C which is both ionic and electronic conductive, the polymer C being different from the polymers A and B; or
- mixtures thereof.

Another object of the present invention is an electrode comprising at least one electrode material as described above.

Another object of the present invention is a battery comprising at least one electrode as described above.

Another object of the present invention is a method of manufacturing an electrode material as described above, the method comprising at least one step of mixing the polymeric material with the electroactive material, thereby obtaining the electrode material, and optionally at least one step of pouring the obtained electrode material on a current collector.

This electrode material may exhibit high electrical conductivity, homogeneity and high stability.

The electrode comprising said electrode material may exhibit high rate capability and high mechanical stability during charge-discharge cycles.

One advantage of the present invention is that the electrode material and the electrode comprising said electrode material may have high electrochemical and mechanical properties even in the absence of a binder, such as PVDF, and of a non-polymeric conductive additive, such as carbon black, which are required in conventional electrode materials.

Thus, one advantage of the present invention is that due to the presence of the polymeric material, the electrode material and the electrode comprising said electrode material have enhanced, or at the very least, equivalent mechanical and electrochemical properties compared to conventional electrode materials and electrodes comprising binder, such as PVDF, and non-polymeric electronic conductive additive, such as carbon black.

Thus, the polymeric material of the electrode material can be used as a replacement of conventional binders, such as PVDF, and conventional non-polymeric electronic conductive additives, such as carbon black, which are required in conventional electrode materials.

Another advantage of the present invention is that the electrode material manufacturing process can be simplified. Indeed, during the mixing step, the polymeric material is mixed with the electroactive material instead of mixing at least the binder and the electronic conductive additive with the electroactive material.

Another advantage of the present invention is that the energy capacity of the battery comprising the electrode can be enhanced since the electrode can comprise a higher percentage of electroactive material.

## BRIEF DESCRIPTION OF THE DRAWING

The present invention will be better understood in the light of the following examples, given by way of illustration, with reference to:

- Figure 1 which represents the synthesis of poly(4-styrenesulfonyl-(trifluoromethylsulfonyl)imide) potassium;
- Figure 2 which represents the impedance spectrum of ionic conductivity measurement of poly(3,4-ethylenedioxythiophene): poly(4-styrenesulfonyl(trifluoromethylsulfonyl)imide) complex;
- Figure 3 which represents the results of the rate capability tests of electrodes comprising $LiFePO_4$ as positive electroactive material;
- Figure 4 which represents the results of the rate capability tests of electrodes comprising $LiFe_{0.4}Mn_{0.6}PO_4$ as positive electroactive material;
- Figure 5 which represents the results of the rate capability tests of the electrode references comprising $LiFePO_4$ as positive electroactive material;
- Figure 6 which represents the results of the rate capability tests of the electrode references comprising $LiFe_{0.4}Mn_{0.6}PO_4$ as positive electroactive material;
- Figure 7 which represents the cyclic voltammetry experiments carried on the electrodes comprising the electrode material 2B or Com 2B;
- Figure 8 which represents the results of the long cyclability tests of the electrode and electrode references comprising $LiFe_{0.4}Mn_{0.6}PO_4$ as positive electroactive material;
- Figure 9 which represents the results of the long cyclability test of the electrode reference comprising $LiFe_{0.4}Mn_{0.6}PO_4$ as positive electroactive material and no carbon black.

## DETAILED DESCRIPTION OF THE INVENTION

In the present disclosure, the term "about" or "around" is defined as the measurement incertitude.

Unless otherwise specified, the limits describe in the present disclosure are considered to be within the range.

### Electrode material

The electrode material in the present invention comprises at least one electroactive material and at least one polymeric material.

In particular, the electroactive material is different from the polymeric material.

The weight ratio between the electroactive material and the polymeric material may range from 80:20 to 98:2, preferably from 84:16 to 98:2, more preferably from 85:15 to 98:2.

In one embodiment, the weight ratio between the electroactive material and the polymeric material can range from 80:20 to 94:6, 84:16 to 98:2, from 84:16 to 95:5, from 85:15 to 98:2, from 85:15 to 95:5, from 85:15 to 94:16, from 80:20 to 90:10 or from 85:15 to 90:10.

For example, the weight ratio between the electroactive material and the polymeric material is 80:20, 85:15, 90:10, 94:6, 95:5, 96:4, 97:3 or 98:2.

In one embodiment, the weight ratio between the electroactive material and the polymeric material can range from 84:16 to 98:2, preferably 84:16 to 95:5, more preferably between 84:16 to 94:6, still more preferably between 85:15 to 94:6.

In one embodiment, the electrode material consists of the electroactive material and the polymeric material.

## Electroactive material

The electroactive material in the present invention can be any suitable electroactive materials for manufacturing any batteries such as lithium, sodium or zinc batteries.

In particular, the electroactive material is chosen according to the intended used.

The electroactive material can be inorganic or organic.

The electroactive material may be selected from $LiFePO_4$ (LFP); $LiFe_{0.4}Mn_{0.6}PO_4$ (LFMP46); $LiNi_xMn_yCo_zO_2$ (NMC), with x, y and z being equal to or greater than 0 and equal to or less than 1, and with x+y+z being equal to 1, such as for example $LiNi_{0.6}Mn_{0.2}Co_{0.2}O_2$; $LiNi_{0.5}Mn_{1.5}O_4$ (LNMO); $Na_3V_2(PO_4)_2F_3$ (NVPF); graphite; lithium titanate of formula $Li_4Ti_5O_{12}$; silicon; and hard carbon.

The electroactive material may preferably be selected from $LiFePO_4$ (LFP); $LiFe_{0.4}Mn_{0.6}PO_4$ (LFMP46); $LiNi_{0.6}Mn_{0.2}Co_{0.2}O_2$ and $LiNi_{0.5}Mn_{1.5}O_4$ (LNMO); more preferably from $LiFePO_4$ (LFP) and $LiFe_{0.4}Mn_{0.6}PO_4$ (LFMP46).

The amount of the electroactive material can be greater than or equal to 80 wt% relative to the total weight of the electrode material. Notably, the amount of the electroactive material can be greater than or equal to 84 wt%, greater than or equal to 85 wt%, greater than or equal to 90 wt%, greater than or equal to 94 wt%, greater than or equal to 95 wt%, greater than or equal to 96 wt% or greater than or equal to 98 wt%, relative to the total weight of the electrode material.

Notably, the amount of the electroactive material can be greater than or equal to 80 wt%, preferably greater than or equal to 84 wt%, more preferably greater than or equal to 85 wt%, relative to the total weight of the electrode material.

In particular, the amount of the electroactive material can be lower than or equal to 98 wt% relative to the total weight of the electrode material. Notably, the amount of the electroactive material is lower than or equal to 96 wt%, lower than or equal to 95 wt%, lower than or equal to 94 wt% or lower than or equal to 90 wt%, preferably lower than or equal to 94 wt%, relative to the total weight of the electrode material.

## Polymeric material

The polymeric material of the present invention is ionic and electronic conductive.

The term "ionic conductive polymeric material or polymer" means that ionic compounds, preferably cations, such as for example $Li^+$ or $Na^+$, are able to move through the polymeric material or polymer.

The term "electronic conductive polymeric material or polymer" means that electrons are able to move through the polymeric material or polymer.

In particular, the polymeric material exhibits both binding properties to ensure mechanical stability of the electrode material and electrical conductivity to ensure electronic percolation within the electrode material. That is why the polymeric material of the electrode material can be used as a replacement of conventional binders, such as PVDF, and conventional non-polymeric electronic conductive additives, such as carbon black, which are required in conventional electrode materials.

In particular, the amount of the polymeric material can be equal to or greater than 2 wt% relative to the total weight of the electrode material. In particular, the amount of the polymeric material can be equal to or greater than 3 wt%, equal to or greater than 4 wt%, equal to or greater than 5 wt%, greater than or equal to 6 wt% or greater than or equal to 7 wt%, relative to the total weight of the electrode material.

Preferably, the amount of the polymeric material is greater than or equal to 2 wt%, or greater than or equal to 5wt%, relative to the total weight of the electrode material.

In particular, the amount of the polymeric material is equal to or lower than 20 wt% relative to the total weight of the electrode material. Notably, the amount of the polymeric material can be equal to or lower 16 wt%, preferably lower than or equal to 15 wt%, relative to the total weight of the electrode material.

In particular, the polymeric material comprises:

- a polymer A which is ionic conductive and a polymer B which is electronic conductive, the polymer B being different from the polymer A;
- a polymer C which is both ionic and electronic conductive, the polymer C being different from the polymers A and B; or
- mixtures thereof.

Polymer A

The polymer A can have an ionic conductivity greater than or equal to $10^{-7}$ $S.cm^{-1}$ and less than or equal to $10^{-3}$ $S.cm^{-1}$, preferably greater than or equal to $10^{-5}$ $S.cm^{-1}$ and less than or equal to $10^{-3}$ $S.cm^{-1}$.

The polymer A can be obtained by the polymerization of at least one monomer substituted by at least one (trifluoromethylsulfonyl)imide functional group. Thanks to the functional group of this monomer, the polymer A is able to act as an ionic conductor.

The polymer A can also be obtained by the polymerization of at least one monomer substituted by at least one (trifluoromethylsulfonyl)imide functional group with at least one comonomer. This comonomer is chosen according to the intended used in order to adjust the ionic conductivity and the mechanical properties, such as Young's modulus, tensile strength, adhesion strength, swelling behaviour, and flexibility of the resulting electrode material.

In the present invention, the polymer A, the monomer and the comonomer are understood to be in neutral or salt form, such as potassium salt or lithium salt.

Examples of suitable monomers substituted by at least one (trifluoromethylsulfonyl)imide functional group include, but are not limited to, 4-styrenesulfonyl(trifluoromethylsulfonyl)imide also called SSTFSI, 3-sulfonyl(trifluoromethylsulfonyl)imide propyl acrylate, 3-sulfonyl(trifluoromethylsulfonyl)imide propyl methacrylate, and a mixture thereof.

The monomer is preferably 4-styrenesulfonyl(trifluoromethylsulfonyl)imide or 3-sulfonyl(trifluoromethylsulfonyl)imide propyl acrylate, more preferably 3-sulfonyl(trifluoromethylsulfonyl)imide propyl acrylate.

Examples of comonomers include, but are not limited to, styrene, alkyl (meth)acrylate, such as butyl (meth)acrylate, or a mixture thereof; with the proviso that the alkyl (meth)acrylate is monofunctional.

The term "monofunctional" means that the alkyl (meth)acrylate comonomer includes one acrylate or one methacrylate functional group.

The term "alkyl" refers to a linear or branched chain monovalent saturated aliphatic hydrocarbon radical of 1 to 20 carbon atoms, preferably 1 to 10 carbon atoms, more preferably of 1 to 4 carbon atoms. For example, the term "linear or branched saturated alkyl" refers to methyl, ethyl, propyl, iso-propyl, n-butyl, iso-butyl, sec-butyl or and t-butyl, preferably methyl ($-CH_3$), ethyl ($-CH_2-CH_3$) and butyl ($-CH_2-CH_2-CH_2-CH_3$).

The term "acrylate functional group" means $-O(CO)-CH_2=CH_2$.

The term "methacrylate functional group" means $-O(CO)-CH_2=CHCH_3$.The comonomer is preferably styrene or butyl acrylate, more preferably styrene.

In particular, the molar ratio between the monomer and the comonomer is from 100:0 to 20:80. Notably, the molar ratio between the monomer and the comonomer is from 100:0 to 25:75, from 100:0 to 50:50, from 50:50 to 20:80, from 50:50 to 25:75, from 80:20 to 25:75, from 80:20 to 50:50, from 75:25 to 25:75, from 75:25 to 50:50 or from 50:50 to 25:75. Typically, the molar ratio between the monomer and the comonomer is 50:50 or 25:75.

In one embodiment, the polymer A is obtained by the polymerization of at least one monomer substituted by at least one (trifluoromethylsulfonyl)imide functional group, preferably 4-styrenesulfonyl(trifluoromethylsulfonyl)imide, 3-sulfonyl(trifluoromethylsulfonyl)imide propyl acrylate, 3-sulfonyl(trifluoromethylsulfonyl)imide propyl methacrylate, or a mixture thereof, more preferably 4-styrenesulfonyl(trifluoromethylsulfonyl)imide, with at least one comonomer, preferably styrene, butyl acrylate or a mixture thereof, wherein the molar ratio between the monomer and the comonomer is from 100:0 to 25:75.

In one embodiment, the polymer A has at least one of the following characteristics:

- a molecular weight from around 30 kg/mol to around 350 kg/mol, preferably from around 100 kg/mol to around 150 kg/mol;
- a dispersity from around 1.1 to around 3.5, preferably from 1.8 to 2.5;
- a glass transition temperature equal to or greater than 40°C and equal to or less than 260°C at the heating rate of $10°C.min^{-1}$, preferably equal to or greater than 220°C and equal to or less than 260°C at the heating rate of $10°C.min^{-1}$, more preferably equal to or greater than 230°C and equal to or less than 250°C, even more preferably equal to or greater than 235°C and equal to or less than 245°C, still more preferably equal to or greater than 235°C and equal to or less than 240°C, for example equal to 237°C;
- is homopoly(4-styrenesulfonyl(trifluoromethylsulfonyl)imide);
- is random copoly(styrene and 4-styrenesulfonyl(trifluoromethylsulfonyl)imide) with a molar ratio styrene: 4-styrenesulfonyl(trifluoromethylsulfonyl)imide of 50:50 or 75:25; or
- is random copoly(butyl acrylate and 3-sulfonyl(trifluoromethylsulfonyl)imide propyl acrylate) with a molar ratio butyl acrylate: 3-sulfonyl(trifluoromethylsulfonyl)imide propyl acrylate of 50:50.

In a preferred embodiment, the polymer A is poly(4-styrenesulfonyl(trifluoromethylsulfonyl)imide), also called PSSTFSI or homopoly(4-styrenesulfonyl(trifluoromethylsulfonyl)imide), for example a potassium salt of PSSTFSI such as poly(4-styrenesulfonyl(trifluoromethylsulfonyl)imide) potassium.

Polymer B

The polymer B can have an electronic conductivity greater than or equal to 50 $S.cm^{-1}$ and less than or equal to 500 $S.cm^{-1}$, and in particular, greater than or equal to 100 $S.cm^{-1}$ and less than or equal to 500 $S.cm^{-1}$, notably greater than or equal to 100 $S.cm^{-1}$ and less than or equal to 300 $S.cm^{-1}$.
Examples of polymer B may include, but are not limited to, polythiophene-based polymers. Preferably, the polymer B can be poly(3,4-ethylenedioxythiophene), also called PEDOT.
In the present invention, the polymer B is understood to be in neutral or salt form.

Polymer C

The polymer C may have an electrical conductivity greater than or equal to 100 $S.cm^{-1}$ and less than or equal to 500 $S.cm^{-1}$, notably greater than or equal to 100 $S.cm^{-1}$ and less than or equal to 300 $S.cm^{-1}$.
The term "electrical conductivity" refers to the ionic and electronic conductivities taken together.
In the present invention, the polymer C is understood to be in neutral or salt form.
In a preferred embodiment, the polymeric material may comprise:

- the polymer A and the polymer B, the polymer B being different from the polymer A, wherein the polymer A has an ionic conductivity greater than or equal to $10^{-7}$ $S.cm^{-1}$ and less than or equal to $10^{-3}$ $S.cm^{-1}$, preferably greater than or equal to $10^{-5}$ $S.cm^{-1}$ and less than or equal to $10^{-3}$ $S.cm^{-1}$, and the polymer B has an electronic conductivity greater than or equal to 50 S.cm-1 and less than or equal to 500 $S.cm^{-1}$, preferably greater than or equal to 100 $S.cm^{-1}$ and less than or equal to 500 $S.cm^{-1}$, more preferably greater than or equal to 100 $S.cm^{-1}$ and less than or equal to 300 $S.cm^{-1}$;

- the polymer C which is both ionic and electronic conductive, the polymer C being different from the polymers A and B and having a total electrical conductivity greater than or equal to 100 $S.cm^{-1}$ and less than or equal to 500 $S.cm^{-1}$, preferably greater than or equal to 100 $S.cm^{-1}$ and less than or equal to 300 $S.cm^{-1}$; or

- mixtures thereof.

In particular, the polymeric material comprising the polymers A and B can have an electrical conductivity greater than or equal to 50 $S.cm^{-1}$ and less than or equal to 500 $S.cm^{-1}$, preferably greater than or equal to 100 $S.cm^{-1}$ and less than or equal to 500 $S.cm^{-1}$, more preferably greater than or equal to 100 $S.cm^{-1}$ and less than or equal to 300 $S.cm^{-1}$.
In one preferred embodiment, the polymers A and B of the polymeric material are linked together by non-covalent bonds, notably bonds selected among hydrogen bonds, electrostatic bonds and Van der Waals bonds. In this embodiment, the polymers A and B form a polymer complex.
In one embodiment, the polymeric material is obtained by the polymerization of a composition comprising monomers of the polymer B and the polymer A. In this embodiment, the molar ratio between the monomers of the polymer B and the polymer A can be adjusted according to the intended used and the ionic and electronic conductivity requirement. The molar ratio between the monomers of the polymer B and the polymer A may range from 20:80 to 80:20, in particular from 20:80 to 70:30, from 30:70 to 70:30, from 25:75 to 50:50, from 50:50 to 20:80 or from 33:77 to 40:60.
In particular, the polymeric material is obtained by the polymerization of a composition comprising monomers of the polymer B and the polymer A, wherein the molar ratio between the monomers of the polymer B and the polymer A is from 25:75 to 50:50, preferably from 33:77 to 40:60.
The polymeric material may have at least one of the following characteristics:

- the polymer A is poly(4-styrenesulfonyl(trifluoromethylsulfonyl)imide) (also called PSSTFSI) and polymer B is poly(3,4-ethylenedioxythiophene) (also called PEDOT);
- the polymeric material has a glass transition temperature from around 35°C to around 95°C at the heating rate of 10°$C.min^{-1}$;
- the water content in polymeric material is equal to or less than 1.5 wt%, preferably greater than or equal to 0.8 wt% and

equal to or less than 1.5 wt%, with the weight percentage wt% based on the total weight of the electrode material.

In a preferred embodiment, the polymeric material comprise poly(4-styrenesulfonyl(trifluoromethylsulfonyl) imide) (also called PSSTFSI) as polymer A and poly(3,4-ethylenedioxythiophene) (also called PEDOT) as polymer B, wherein the poly(4-styrenesulfonyl(trifluoromethylsulfonyl)imide) (also called PSSTFSI) and the poly(3,4-ethylenedioxythiophene) (also called PEDOT) can be linked together by non-covalent bonds, notably bonds selected among hydrogen bonds, electrostatic bonds and Van der Waals bonds.

In particular, the interaction between PEDOT and PSSTFSI can be present in the form of a cation-anion interaction between the corresponding anion of PSSTFSI with the corresponding cation of 3,4-ethylenedioxythiophene moieties.

For example, the polymeric material comprising poly(4-styrenesulfonyl(trifluoromethylsulfonyl)imide) (also called PSSTFSI) as polymer A and poly(3,4-ethylenedioxythiophene) (also called PEDOT) as polymer B can be a polymer complex of formula (I):

PEDOT
PSSTFSI
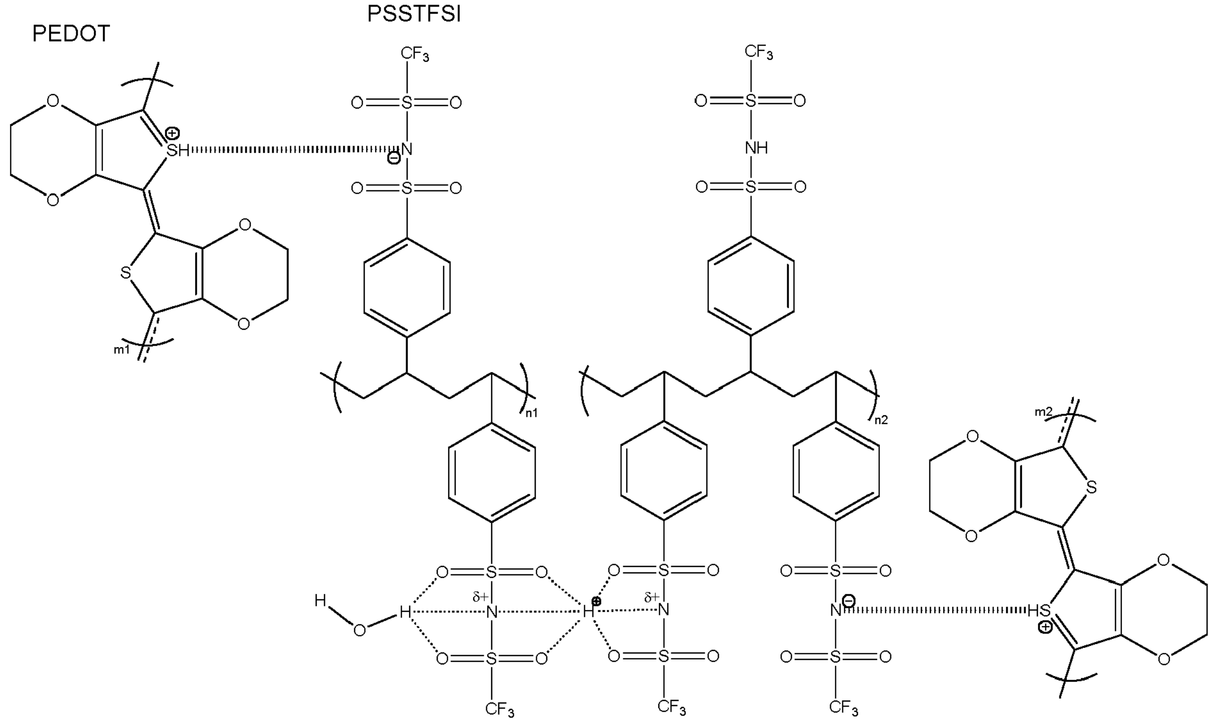
PSSTFSI
PEDOT

n1,n2 : number of SSTFSI repeating unit in PSSTFSI chain
m1,m2 : number of EDOT repeating unit in PEDOT chain

(I)

Wherein EDOT refers to 3,4-ethylenedioxythiophene and SSTFSI refers to 4-styrenesulfonyl(trifluoromethylsulfonyl)imide.

<u>Others components</u>

In addition to the electroactive material and the polymeric material, the electrode material can comprise others components which are conventionally employed in electrode materials.

<u>Binder</u>

In particular, the electrode material may comprise at least one binder. Preferably, this binder is different from the electroactive material and the polymeric material.

In particular, the amount of the binder can be lower than or equal to 7 wt% relative to the total weight of the electrode material. Notably, the amount of the binder can be lower than or equal to 6 wt%, lower than or equal to 5 wt%, lower than or equal to 4 wt%, lower than or equal to 2 wt% or lower than or equal to 1 wt%, relative to the total weight of the

electrode material. For example, the amount of the binder can range from 5 wt% to 2 wt%, relative to the total weight of the electrode material.

In one embodiment, the amount of the binder is lower than or equal to 7 wt%, preferably lower than or equal to 6 wt%, more preferably lower than or equal to 5 wt%, relative to the total weight of the electrode material.

In one preferred embodiment, the amount of the binder is lower than or equal to 2 wt%, preferably lower than or equal to 1 wt%, relative to the total weight of the electrode material.

In one preferred embodiment, the electrode material is substantially free from said binder. The term "substantially free" means that the electrode material comprises less than 0.5 wt%, preferably less than 0.2 wt%, more preferably less than 0.1 wt%, of binder relative to the total weight of the electrode material.

In particular, the binder may be a polymeric binder, notably a non-conductive polymeric binder. A "non-conductive polymeric binder" is not ionic conductive and not electronic conductive.

Examples of a suitable polymeric binder, notably a non-conductive polymeric binder, include, but are not limited to, poly(vinylidene difluoride); poly(tetrafluoroethylene); cellulose fibers and carboxymethyl cellulose; diacetyl cellulose; hydroxyethyl cellulose; hydroxypropyl cellulose; polyacrylic acid; polyvinyl alcohol; polyethylene oxide/polyethylene glycol; polyacrylonitrile; polymethacrylic acid; styrene-butadiene rubber; alginate; carrageenan; gum Arabic; guar gum; xanthan gum; starch; chitosan; and a mixture thereof.

In particular, the binder is poly(vinylidene difluoride), also called PVDF.

Non-polymeric electronic conductive additive

In particular, the electrode material may comprise at least one non-polymeric electronic conductive additive. Preferably, this non-polymeric electronic conductive additive is different from the electroactive material, the polymeric material and the binder.

In particular, the amount of the non-polymeric electronic conductive additive can be lower than or equal to 5 wt% relative to the total weight of the electrode material. Notably, the amount of the non-polymeric electronic conductive additive can be lower than or equal to 4 wt%, lower than or equal to 3 wt%, lower than or equal to 2 wt% or lower than or equal to 1 wt%, relative to the total weight of the electrode material.

In one embodiment, the amount of the non-polymeric electronic conductive additive is lower than or equal to 5 wt%, preferably lower than or equal to 4 wt%, more preferably lower than or equal to 3 wt%, still more preferably lower than or equal to 2 wt%, relative to the total weight of the electrode material.

In one preferred embodiment, the amount of the non-polymeric electronic conductive additive is lower than or equal to 2 wt%, preferably lower than or equal to 1 wt%, relative to the total weight of the electrode material.

In one preferred embodiment, the electrode material is substantially free from said non-polymeric electronic conductive additive. The term "substantially free" means that the electrode material comprises less than 0.5 wt%, preferably less than 0.2 wt%, more preferably less than 0.1 wt%, of non-polymeric electronic conductive additive relative to the total weight of the electrode material.

In particular, the non-polymeric electronic conductive additive can be elemental carbon.

Examples of a suitable elemental carbon include, but are not limited to, carbon black, Super P carbon black, acetylene black, ketjen black, channel black, natural or synthetic graphite, carbon fibers, carbon nanotubes, graphene, vapor grown carbon fibers or a mixture thereof, preferably carbon black or natural or synthetic graphite. In particular, the elemental carbon is carbon black; natural or synthetic graphite; carbon fibers; carbon nanotubes; graphene; or a mixture thereof.

Electrode

The present invention also relates to an electrode comprising at least one electrode material as described above.

Said electrode exhibits good electrochemical and mechanical performances.

The electrode can be a negative or positive electrode.

When the electrode is a positive electrode, the electroactive material may be an inorganic electroactive material.

Thanks to the presence of the polymeric material, the electrochemical performance of said electrode is improved.

Notably, as the polymeric material exhibits high electrical conductivity, the ionic diffusion coefficient within the electrode increases. The reversible capacity at high rates and the long range cyclability are also improved compared to conventionally used electrodes.

In particular, the polymeric material has the effect to improve the electrochemical performance and mechanical properties of electrodes with high electroactive material loading, compared to conventionally used electrodes.

The term "electrode with high electroactive material loading" refers to electrodes manufactured from an electrode material comprising at least 90 wt% of electroactive material relative to the total weight of the electrode material.

Battery

The present invention also relates to a battery comprising at least one electrode as described above.

The battery may be a Lithium-ion battery, a Sodium-ion battery, a Zinc-ion battery or any other battery.

Method of manufacturing an electrode material

The present invention also relates to a method of manufacturing the electrode material as described above.

The method may comprise at least one step of mixing the polymeric material with the electroactive material, thereby obtaining the electrode material, and optionally at least one step of pouring the obtained electrode material on a current collector.

In one embodiment, the method comprises a step of removing water comprised in the polymeric material prior to the step of mixing the polymeric material with the electroactive material.

For example, the step of removing water comprised in the polymeric material is carried out by freeze-drying. The effect of the water removal is to prevent any undesirable reaction between the electroactive material and/or the electrolyte that will be used in the battery.

The said manufacturing method is simplified as the mixing step only requires the mixture of two components, i.e. the polymeric material and the electroactive material, compared to manufacturing method of conventional electrode materials which require the mixture of three components, i.e. the conventional binder, the conventional non-polymeric electronic conductive additive and the electroactive material.

## EXAMPLES

Hereinafter, the present invention will be described by way of examples. However, the present invention should not be construed as being limited to these examples.

### Example 1: Synthesis of poly(4-styrenesulfonyl(trifluoromethylsulfonyl)imide) potassium

#### 1) Synthesis of potassium 4-styrenesulfonyl(trifluoromethylsulfonyl)imide

The potassium 4-styrenesulfonyl(trifluoromethylsulfonyl)imide) was first synthetized as described in Figure 1.

8.0 mL of oxalyl chloride 98% (TCI) and 0.348g extra dry N, N-dimethylformamide (DMF, Sigma Aldrich) were added to a solution of 160 mL of dry acetonitrile (Sigma Aldrich). The solution was stirring under argon atmosphere at room temperature. When the solution turns yellow, 16 g of 4-styrenesulfonic acid sodium salt (Sigma Aldrich) were added slowly to the solution, which was then stirred overnight. NaCl precipitate was removed by filtration, while 11.6 g of Trifluoromethanesulfonimide (TCI) were added in the filtrate solution, under stirring at 0°C. Then, 32 mL triethylamine (Thermo Fisher) were added dropwise and the reaction was let for 16 hours at room temperature. The precipitate was removed by filtration, the solvent was evaporated from the filtrate and the resulting brown solid was dissolved in 50 mL of dichloromethane. This solution was washed with 2 $\times$ 200 mL of an aqueous solution of $NaHCO_3$ 4% (Sigma Aldrich) and 100 mL of hydrochloric acid 1M (Sigma Aldrich). The potassium form of 4-styrenesulfonyl(trifluoromethylsulfonyl) imide (SSTFSI) was obtained by neutralization of the acid monomer by a molar excess of $K_2CO_3$ (Sigma Aldrich) in water. The resulting suspension was stirred for overnight, filtered and dried to obtain a light-yellow solid which was characterized with H-NMR, F-NMR and C-NMR in 1 mg/mL solution of deuterated DMSO using Bruker 400 Avance.

$^1H$ NMR (400 MHz, DMSO-$d_6$, ppm): 5.38 ($CH_2$=CH-, d, 1H), 5.95 ($CH_2$=CH-, d, 1H), 6.77 ($CH_2$=CH-, dd, 1H), 7.64 ($C_6H_4$-, dd, 4H).

$^{13}C$ NMR (400 MHz, DMSO-$d_6$, ppm): 116.78 ($CH_2$=CH-), 118.48 and 121.70 (-$CF_3$), 126.07-126.61 (-$CH_2$ aromatic), 135.74 ($CH_2$=CH-), 139.77 and 144.35 (-CH aromatic).

$^{19}F$ NMR (400 MHz, DMSO-$d_6$, ppm): -77.81. 7 (-$CF_3$, s, 3 F).

These results show that a styrene-based monomer was successfully synthetized.

#### 2) Synthesis of poly(4-styrenesulfonyl(trifluoromethylsulfonyl)imide) potassium

The polymerization of poly(4-styrenesulfonyl(trifluoromethylsulfonyl)imide) potassium was done through reversible addition-fragmentation chain-transfer (RAFT).

To target a molecular weight of 100.000 g/mol, 4.1 g of potassium 4-styrenesulfonyl (trifluoromethylsulfonyl), 0.00038g 2,2'-Azobis(2-methylpropionitrile (AIBN) (Sigma Aldrich) and 0.00427g 2-(Dodecylthiocarbonothioylthio)-2-methyl propanoic acid (TCI) were added into a Schlenk line. Argon atmosphere was introduced before the addition of 10 mL previously cryogenic-distilled DMF (Sigma Aldrich). The oxygen removal step by freeze-thaw the solution in liquid

nitrogen was performed 3 times. Solution was rigorously stirred at 65°C for 24 hours to let the polymerization reaction occur. Obtained viscous polymer solution was precipitated in diethyl ether for 2 times. The polymer was dried at 60°C under vacuum for about 24h in order to remove the remaining solvents.

### 3) Characterization

The synthetized polymer was then characterized.

The molecular weight of the synthetized polymer was analysed by Size Exclusion Chromatography (SEC) in dimethyformamide (DMF + LiBr 1g/L) as the eluent on an Ultimate 3000 system from Thermoscientific equipped with diode array detector (DAD), multi-angles light scattering detector (MALS) and differential refractive index detector (dRI) from Wyatt technology. The results of the Size Exclusion Chromatography are reported in Table 1.

**Table** 1: **Mp** represents the molecular weight of the highest peak, **Mn** represents the number average molecular weight, **Mw** represents the weight average molecular weight, **Mz** and **Mz+1** represent the higher average molecular weight and Mv represents the viscosity average molecular weight. The dispersity **(Đ** = Mw/Mn versus PS) was calculated with a calibration curve based on narrow polystyrene (PS) standards, using only the dRI detector.

| Mp (g/mol) | Mn (g/mol) | Mw (g/mol) | Mz (g/mol) | Mz+1 (g/mol) | Mv (g/mol) | Đ |
|---|---|---|---|---|---|---|
| 125000 | 64000 | 134000 | 221000 | 320000 | 123000 | 2.1 |

This result shows that the synthetized polymer corresponds to the poly(4-styrenesulfonyl(trifluoromethylsulfonyl)imide) potassium, which is the potassium salt form of PSSTFSI.

Differential Scanning Calorimetry (DSC) analysis was performed to examine the glass transition of the synthesized polymer and using a TA instrument DSC Q200 LN2. 10-12.5 mg of the samples were measured in aluminium pans within the temperature range from - 20°C to 300°C using a heating and cooling rate at 10°C/min for 2 cycles.

This DSC analysis reveals that poly(4-styrenesulfonyl(trifluoromethylsulfonyl)imide) potassium is characterized by a glass transition temperature (Tg) of about 237°C at the heating rate of 10°C/min.

## Example 2: Synthesis of the polymeric material

### 1) Synthesis of poly(3,4-ethylenedioxythiophene): poly(4-styrenesulfonyl(trifluoromethylsulfonyl)imide) complex

The poly(3,4-ethylenedioxythiophene): poly(4-styrenesulfonyl(trifluoromethylsulfonyl)imide) complex, also named PEDOT:PSSTFSI or PEDOT:PSSTFSI complex, was synthesized by classical oxidative polymerization of 3,4-Ethylenedioxythiophene (EDOT) in the aqueous solution of the poly(4-styrenesulfonyl(trifluoromethylsulfonyl)imide) obtained in Example 1.

The molar ratio of EDOT:SSTFSI was 0.5 (33:67), while the molar ratio of $(NH_4)_2S_2O_8$:$FeCl_3$ was 3.5 and oxidant ratio to EDOT monomer was 2.3, wherein SSTFSI refers to 4-styrenesulfonyl(trifluoromethylsulfonyl)imide. In round bottom flask, 190 μL EDOT were added to 1.025 g of the polymer obtained in Example 1 in 112.5 mL deionized (DI) water solution. The solution was vigorous stirred under a nitrogen atmosphere. Further, 6.25 mL of each 64 mg/mL $(NH_4)_2S_2O_8$ 98% (Sigma Aldrich) and 13.6 mg/mL anhydrous $FeCl_3$ (Sigma Aldrich) were added as oxidants. After 72 h at 10 °C, the polymer dispersions were purified using Lewatit S100 KR/H and Lewatit MP62WS ion exchange resins (60 mg of resin per 1 mL of ink). The solution was then concentrated using an ultrafiltration cell until maximum water could be removed and a dark blue gel was obtained.

### 2) Water removal

Water in PEDOT:PSSTFSI complex was then removed by freeze-drying method as it can react with the battery electroactive material and the electrolyte.

20 mL of the obtained dark blue gel were put in the 50 mL falcon, then freezed in liquid nitrogen and lyophilized using BenchTop Pro with Omnitronics with pressure of 75 μB and dew point of -80°C for 2-3 days. Dark blue flaky powder was obtained.

### 3) Characterization

The synthesized polymeric material, PEDOT:PSSTFSI, was characterized.

Thermogravimetric Analysis (TGA) was done to determine its water quantity using TGA Q500 apparatus from TA instrument with a sample amount around 4-6 mg under a nitrogen flow of 40-60 mL/min, from room temperature to 800°C and at a heating rate of 10°C/min.

The measured water content is around 1.4wt% relative to the total weight of the polymeric material with an accuracy of ±1°C and a weighing precision of ±0.01 %.

Differential Scanning Calorimetry (DSC) analysis was performed to examine the glass transition Temperature of the synthesized polymeric material and using a TA instrument DSC Q200 LN2. 10-12.5 mg of the samples were measured in aluminium pans within the temperature range from -0°C to 180°C using a heating and cooling rate at 10°C/min for 2 cycles. The uncertainty of the measurement is ± 0.05°C.

This DSC analysis reveals that poly(3,4-ethylenedioxythiophene): poly(4-styrenesulfonyl(trifluoromethylsulfonyl)imide) complex is characterized by a glass transition temperature (Tg) of around 53°C at the heating rate of 10°C/min.

X-ray photoelectron spectroscopy (XPS) measurements were carried out on the poly(4-styrenesulfonyl(trifluoromethylsulfonyl)imide) potassium obtained in Example 1 and on the synthesized polymeric material to determine the complexation and the binding properties of poly(3,4-ethylenedioxythiophene): poly(4-styrenesulfonyl(trifluoromethylsulfonyl)imide). These XPS measurements reveal that the interaction between poly(4-styrenesulfonyl(trifluoromethylsulfonyl)imide) and poly(3,4-ethylenedioxythiophene) is present in the form of a cation-anion interaction from $PSSTFSI^-$ with $EDOT^+$ moieties; wherein $PSSTFSI^-$ refers to the corresponding anion of PSSTFSI and $EDOT^+$ refers to the corresponding cation of EDOT. This results also show that PSSTFSI chains in PEDOT:PSSTFSI complex form hydrogen bond with water.

### Example 3: Reference

For reference, poly(vinylidene fluoride) (PVDF, Sigma Aldrich) was mixed with carbon black (CB, Alfa Aesar) with mass ratio of 1:1 PVDF:CB and solution concentration of 5 wt% dry mass in NMP solution.

### Example 4: Electrical and Ionic conductivity

#### 1) Ionic conductivity

The ionic conductivity was measured through impedance spectroscopy on drop-casted aqueous polymeric solution (PEDOT:PSSTFSI). Prior to the drop-casting, 5% DMSO and less than 0.05 wt.% Zonyl FS300 fluorosurfactant were added to the aqueous polymeric material obtained in example 2 and stirred vigorously overnight, to improve the film formation. On a 9 $mm^2$ masked area of conductive fluorine-doped tin oxide glass electrode pieces, 50 μL of the ink is drop-casted and dried at room temperature overnight. The impedance measurement was done in 2 electrodes cell setup. Sample electrode was placed in an open electrochemical cell as working electrode containing 0.5M $LiClO_4$ in propylene carbonate mimicking the liquid electrolyte in Li-ion battery, while an epoxy-sealed platinum foil is used as reference/-counter electrode. The cell was connected to BioLogic VMP-3e Multichannel Potentiostat impedance channel, and was oscillated with a 10 mV AC vs open circuit potential from $10^5$-$10^{-1}$ Hz. The ionic resistance was deduced from the width of the 45° high-frequency region of the resulting Nyquist plots following this equation:

$$\sigma_{ionic} = \frac{t}{3((Z_{real(low\ frequencies)} - Z_{real(high\ frequencies)}) \times A)}$$

Where $\sigma_{ionic}$ is the ionic conductivity value (S/cm), $Z_{real(low\ frequencies)}$ the extrapolated low frequency intercepts (Ω), $Z_{real(high\ frequencies)}$ high frequency intercepts (Ω), **t** the thickness of the sample (cm) and A the area. The results are represented in Figure 2.

The results show (Fig 2) that an ionic conductivity of 3.42 $10^{-5}$ $S.cm^{-1}$ is obtained for the polymeric material described in Example 2. The polymeric material described in Example 2 is therefore ionic conductive.

#### 2) Electrical conductivity

The electrical conductivity of the polymeric material obtained in Example 2 and of the reference obtained in Example 3 were measured by the 4-probe method of doctor blade glass casted film. As defined above, the result of electrical conductivity is a sum of both the ionic and electronic conductivity.

The polymeric material obtained in Example 2 or in Example 3 was dissolved in NMP solvent with concentration of 5 wt%. The films were deposited on a previously cleaned glass substrate under ambient conditions using a doctor blade with 100 μL solution at 3 different thicknesses of 50, 75 and 100 μm and casting speed of 10 mm/s. The casted films were

dried on a hot plate under ambient conditions at 120°C for 5 minutes.

The resistivity measurement was done at least on 5 points for each casted film, while the Dektak XT was measuring the thickness of scratch and non-scratch parts of the film for at least 6 different points. The obtained resistivity and thickness values were then used to determine the electrical conductivity following this equation:

$$\sigma_{electrical} = \frac{1}{R \times t}$$

Where $\sigma_{electrical}$ is the electrical conductivity value (S/cm), ***R*** the resistivity of the sample (Ω) and **t** the thickness of the sample (cm), while the resistivity itself has been multiplied with the geometry factor of 4.3882 based on the dimension of the sample.

The results are reported in Table 2.

**Table 2**

| Example | Example 2: PEDOT:PSSTFSI film made from an NMP-based ink | Example 3: 1:1 PVDF:CB (5 wt.% in NMP) |
|---|---|---|
| **Average $\sigma_{electrical}$ (S/Cm)** | 30.9±4.6 | 6.8±3.8 |

These results show that the polymeric material obtained in Example 2 is electrical conductive. As the electrical conductivity is several orders of magnitude higher than the ionic one determined previously, the average $\sigma_{electrical}$ can be approximated to the electronic conductivity of the polymeric material.

Moreover, these results show that the polymeric material obtained in Example 2 is much better electrical conductive than the reference made of poly(vinylidene fluoride) and carbon black, which is conventionally used.

**Example 5: Electrode materials**

The polymeric material obtained in Example 2 was mixed with various electroactive materials according to Table 3 in order to obtain various electrode materials.

The polymeric material obtained in Example 2 was dissolved in N-methyl-2-pyrrolidone (NMP, Sigma Aldrich) solvent for overnight at room temperature. Then, the corresponding electroactive material (Table 3) was added. The resulting solution was stirred for 2 hours minimum. A homogenous slurry was obtained.

| Electrode material | | 1A | 1B | 1C | 1D | 2A | 2B | 2C | 2D | 2E | 3 | 4 |
|---|---|---|---|---|---|---|---|---|---|---|---|---|
| **Polymeric material obtained in Example 2 (%)** | | 20 | 15 | 10 | 6 | 20 | 15 | 10 | 6 | 2 | 15 | 15 |
| **Electro-active material** | **$LiFePO_4$** (LFP) **(%)** | 80 | 85 | 90 | 94 | / | / | / | / | / | / | / |
| | **$LiFe_{0.4}Mn_{0.6}PO_4$** (LFMP 46, S4R) **(%)** | / | / | / | / | 80 | 85 | 90 | 94 | 98 | / | / |
| | **$LiNi_{0.6}Mn_{0.2}Co_{0.2}O_2$** (NMC622) **(%)** | / | / | / | / | / | / | / | / | / | 85 | / |
| | **$LiNi_{0.5}Mn_{1.5}O_4$** (LNMO) **(%)** | / | / | / | / | / | / | / | / | / | / | 85 |

Table 3

**Example 6: Electrodes**

For each electrode material obtained in Example 5, the obtained slurry was casted on an aluminium current collector using doctor blade with 200 μm thickness and dried at 80°C for overnight. The casted electrode was cut with 16 mm diameter cutters, which were then calendared at 5 tons using pellet die, weighted, and vacuum dried overnight at 80°C. The average mass loading of the electrode was 3.5 - 4 mg/cm$^2$. After drying, each positive electrode was transferred into an Argon filled glovebox (<0.1 ppm oxygen and -75°C dew point) for coin cells' assembly. The obtained electrodes were homogeneous.

**Example 7: Electrode reference**

For reference, the corresponding electroactive material as reported in Table 4 was grinded together with carbon black (CB, Alfa Aesar) before being mixed with poly(vinylidene fluoride) (PVDF, Sigma Aldrich) in NMP solution with mass ratio of 1:1 CB:PVDF. As mentioned before, carbon black and PVDF are used as, respectively, non-polymeric electronic conductive additive and binder. The obtained slurry was casted on an aluminium current collector using doctor blade with 200 μm thickness and dried at 80°C for overnight. The casted electrode was cut with 16mm diameter cutters, which were then calendared at 5 tons using pellet die, weighted, and vacuum dried overnight at 80°C. The average mass loading of the electrode was 3.5 - 4 mg/cm$^2$. After drying, each positive electrode was transferred into an Argon filled glovebox (<0.1 ppm oxygen and -75°C dew point) for coin cells' assembly. The obtained electrodes were homogeneous.

**Table 4**

| **Comparative electrode material** | **Com 1A** | **Com 1B** | **Com 1C** | **Com 1D** | | |
|---|---|---|---|---|---|---|
| **PVDF (%)** | 10 | 7.5 | 5 | 3 | | |
| **Carbon black (CB) (%)** | 10 | 7.5 | 5 | 3 | | |
| **$LiFePO_4$** (LFP)(%) | 80 | 85 | 90 | 94 | | |
| **Comparative electrode material** | **Com 2A** | **Com 2B** | **Com 2C** | **Com 2D** | **Com 2E** | **Com 2F** |
| **PVDF (%)** | 10 | 7.5 | 5 | 3 | 1 | 15 |

(continued)

| Comparative electrode material | Com 2A | Com 2B | Com 2C | Com 2D | Com 2E | Com 2F |
|---|---|---|---|---|---|---|
| **Carbon black (CB) (%)** | 10 | 7.5 | 5 | 3 | 1 | 0 |
| **$LiFe_{0.4}Mn_{0.6}PO_4$** (LFMP 46, S4R) **(%)** | 80 | 85 | 90 | 94 | 98 | 85 |

**Example 8: Electrochemical performances**

The electrochemical performances evaluation of electrodes comprising the electrode materials 1A-1D, 2A-2E, Com 1A-Com1D and Com 2A-Com 2E obtained in Example 5 or 7 was conducted in CR2032-type coin cells.

**a) Half-cell assembly**

Half-cells were assembled in Argon filled glovebox using lithium metal as negative electrode and as reference, Whatman as separators and commercial LP30 (1M $LiPF_6$ in 1:1 EC (ethylene carbonate):DMC (dimethyl carbonate, Solvionic) as electrolyte. Before any electrochemical test, the cells were allowed to rest for 6 hours at temperature-controlled room at 25°C.

**b) Rate capability performance**

The rate capability of electrodes comprising the electrode materials 1A-1D, 2A-2E, Com 1A-Com1D and Com 2A-Com 2E obtained in Example 5 or 7 was tested through a Galvanostatic cycling with potential limitation (GCPL) protocol.

Results of the Galvanostatic cycling with potential limitation protocol (GCPL) are represented in Figures 3 to 6 and detailed results of rate capability tests are reported in Tables 5 to 6.

In particular, Figure 3 represents the results of the rate capability tests of electrodes comprising $LiFePO_4$ as positive electroactive material wherein,

- Fig 3A represents the results of the rate capability test of the electrode comprising the electrode material 1A obtained in example 5;
- Fig 3B represents the results of the rate capability test of the electrode comprising the electrode material 1B obtained in example 5;
- Fig 3C represents the results of the rate capability test of the electrode comprising the electrode material 1C obtained in example 5;
- Fig 3D represents the results of the rate capability test of the electrode comprising the electrode material 1D obtained in example 5.

In particular, Figure 4 represents the results of the rate capability tests of electrodes comprising $LiFe_{0.4}Mn_{0.6}PO_4$ as positive electroactive material wherein,

- Fig 4A represents the results of the rate capability test of the electrode comprising the electrode material 2A obtained in example 5;
- Fig 4B represents the results of the rate capability test of the electrode comprising the electrode material 2B obtained in example 5;
- Fig 4C represents the results of the rate capability test of the electrode comprising the electrode material 2C obtained in example 5;
- Fig 4D represents the results of the rate capability test of the electrode comprising the electrode material 2D obtained in example 5;
- Fig 4E represents the results of the rate capability test of the electrode comprising the electrode material 2E obtained in example 5.

In particular, Figure 5 represents the results of the rate capability tests of the Electrode reference comprising $LiFePO_4$ as positive electroactive material wherein,

- Fig 5A represents the results of the rate capability test of the electrode comprising the comparative electrode material Com 1A obtained in example 7;
- Fig 5B represents the results of the rate capability test of the electrode comprising the comparative electrode material

Com 1B obtained in example 7;

- Fig 5C represents the results of the rate capability test of the electrode comprising the comparative electrode material Com 1C obtained in example 7;
- Fig 5D represents the results of the rate capability test of the electrode comprising the comparative electrode material Com 1D obtained in example 7;

In particular, Figure 6 represents the results of the rate capability tests of the Electrode reference comprising $LiFe_{0.4}Mn_{0.6}PO_4$ as positive electroactive material wherein,

- Fig 6A represents the results of the rate capability test of the electrode comprising the comparative electrode material Com 2A obtained in example 7;
- Fig 6B represents the results of the rate capability test of the electrode comprising the comparative electrode material Com 2B obtained in example 7;
- Fig 6C represents the results of the rate capability test of the electrode comprising the comparative electrode material Com 2C obtained in example 7;
- Fig 6D represents the results of the rate capability test of the electrode comprising the comparative electrode material Com 2D obtained in example 7;
- Fig 6E represents the results of the rate capability test of the electrode comprising the comparative electrode material Com 2E obtained in example 7.

**Table 5:** 'C' is the exchange of $1Li^+$ or 1 electron in 1 hour.

| C rate | Electrodes with $LiFePO_4$ as positive electroactive material (Q discharge mA.h/g) | | | | Electrodes references with $LiFePO_4$ as positive electroactive material (Q discharge mA.h/g) | | | |
|---|---|---|---|---|---|---|---|---|
| | 1A | 1B | 1C | 1D | Com 1A | Com 2A | Com 3A | Com 4A |
| C/10 | 169.4 | 171.3 | 152.9 | 167.1 | 152.6 | 151.1 | 148.8 | 172.7 |
| C/5 | 167.7 | 169.3 | 151.3 | 164.8 | 150.4 | 148.8 | 136.2 | 151.1 |
| C/2 | 161.3 | 162.3 | 144.8 | 149.7 | 144.0 | 137.4 | 123.2 | 115.2 |
| C | 153.2 | 153.2 | 135.5 | 119.1 | 136.0 | 125.2 | 107.2 | 90.1 |
| 2C | 138.7 | 139.0 | 124.2 | 94.9 | 121.9 | 107.5 | 82.3 | 48.7 |
| 4C | 103.9 | 115.6 | 108.0 | 67.4 | 99.2 | 82.1 | 50.3 | 22.2 |
| C/10 II | 125.3 | 169.5 | 153.1 | 126.4 | 149.4 | 146.2 | 135.2 | 114.2 |
| C/5 II | 93.5 | 163.1 | 151.0 | 71.4 | 148.4 | 142.7 | 115.8 | 62.0 |

**Table 6:** 'C' is the exchange of 1 $Li^+$ or 1 electron in 1 hour.

| C rate | Electrodes with $LiFe_{0.4}Mn_{0.6}PO_4$ as positive electroactive material (Q discharge mA.h/g) | | | | | Electrode references with $LiFe_{0.4}Mn_{0.6}PO_4$ as positive electroactive material (Q discharge mA.h/g) | | | | |
|---|---|---|---|---|---|---|---|---|---|---|
| | 2A | 2B | 2C | 2D | 2E | Com 2A | Com 2B | Com 2C | Com 2D | Com 2E |
| C/10 | 141.1 | 140.5 | 143.7 | 148.1 | 148.2 | 148.3 | 147.2 | 146.2 | 105.7 | 137.7 |
| C/5 | 134.9 | 133.1 | 137.0 | 135.9 | 133.6 | 139.8 | 138.9 | 123.2 | 39.3 | 79.4 |
| C/2 | 119.7 | 118.1 | 121.2 | 116.3 | 112.9 | 122.9 | 120.9 | 43.0 | 2.0 | 33.0 |
| C | 104.1 | 102.1 | 100.5 | 95.9 | 91.2 | 105.4 | 97.9 | 1.0 | 0.005 | 2.8 |
| 2C | 82.5 | 80.9 | 69.9 | 66.6 | 60.0 | 84.9 | 64.34 | 0.008 | 0.004 | 0.02 |
| 4C | 39.5 | 49.9 | 29.6 | 26.9 | 25.6 | 60.2 | 20.0 | 0.008 | 0.008 | 0.08 |
| C/10 II | 141.3 | 138.9 | 141.7 | 138.1 | 125.4 | 143.1 | 143.1 | 134.9 | 55.3 | 78.8 |
| C/5 II | 129.0 | 126.8 | 126.4 | 122.1 | 105.0 | 128.8 | 127.8 | 74.8 | 10.3 | 26.2 |

The results reported in Tables 5 to 6 and in Figures 3 to 6 show that the electrodes comprising an electrode material according to the invention exhibit good electrochemical performance regardless of the electroactive material used or the loading of the electroactive material.

These results also show that the initial capacity at C/10 of the electrodes according to the invention is recovered after the rate capability test, demonstrating good cycling stability and no degradation at high current densities.

In particular, when comparing the electrodes according to the invention with the electrode references, the results show that the electrodes according to the invention have at least similar, if not even better, electrochemical performance than the electrode references. Indeed, these results (Fig 4 and 6) show that a specific capacity higher than 140 mAh/g can be obtained at C/10, both for the electrodes according to the invention and for the electrode references, where 'C' is the exchange of $1Li^+$ or 1 electron in 1 hour.

More generally, these results show that the electrodes according to the invention have a higher capacity at high rates, compared to the electrode references. The results (Table 6) show that the electrode according to the invention 2B-2E delivers a higher capacity at 4C than the electrode references Com 2B-Com 2E. Notably, the electrode comprising the electrode material 2B still delivers a capacity of 50 mAh/g at 4C, while the corresponding reference electrode delivers only 20 mAh/g.

Moreover, the results (Tables 5 and 6, columns 1C-1D and 2C-2D) show that the high cyclability of the electrodes according to the invention comprising higher mass percentage of electroactive material was maintained at high C rates up to 4C. On the contrary, the results (Table 6, column Com 2D) show that the electrode reference has poor electrochemical performance already at C/5.

Therefore, these results show that the electrodes according to the invention have much better electrochemical performance than the electrode references, when the loading of electroactive material is high (at least 90 wt% relative to the total weight of the electrode material).

Thus, these results show that the polymeric material obtained in example 2 improves the electrochemical stability and the capacity retention of the electrode.

**c) Diffusion properties**

The cyclic voltammetry (CV) experiments were carried out on the electrode comprising the electrode material 2B and the corresponding electrode reference Com 2B at various scan rates (0.05 mV/s, 0.1 mV/s, 0.2 mV/s, 0.3 mV/s, 0.4 mV/s, 0.5 mV/S). The corresponding maximum current peaks were plotted as a function of the square root of scan rate, as represented in Figure 7 and reported in Table 7.

In particular, Figure 7 represents the cyclic voltammetry experiments carried on the electrodes comprising the electrode material 2B or Com 2B, wherein,

- Fig 7A represents the cyclic voltammetry experiments carried out at various scan rates on the electrode comprising the electrode material 2B obtained in Example 5;
- Fig 7B represents the cyclic voltammetry experiments carried out at various scan rates on the electrode reference comprising the electrode material Com 2B obtained in Example 7;
- Fig 7C represents the linear fit of the cyclic voltammogram of the electrode comprising the electrode material 2B obtained in Example 5;
- Fig 7D represents the linear fit of the cyclic voltammogram of the electrode reference comprising the electrode material Com 2B obtained in Example 7.

The apparent lithium diffusion coefficient ($D_{appLi+}$) was then determined by the Randles-Sevcik equation as follows, and the results are reported in Table 7.

$$\frac{i_p}{m} = 0.4463F\left(\frac{F}{RT}\right)^{1/2} C_{Li}^{*} v^{1/2} A_e D_{appLi+}^{1/2}$$

Where 'm' represents the electrode's mass, '$\boldsymbol{C_{Li}^{*}}$' the initial concentration of lithium in $LiFe_{0.4}Mn_{0.6}PO_4$, '$A_e$' the electrode area per mass unit, and '$\boldsymbol{D_{appLi+}^{1/2}}$' the apparent diffusion constant of lithium. '$\mathbf{C_{Li}^{*}}$' is considered as the total quantity of lithium within a particle before delithiation of $LiFe_{0.4}Mn_{0.6}PO_4$, having a bulk density of 3.4 $g/cm^3$ and a molar mass of 157.25 g/mol. Thus, the lithium concentration is 0.0216 $mol/cm^3$.

Table 7

| Electrode | Line | Linear fit equation | $R^2$ | $D_{appLi^+}$ ($cm^2/s$) |
|---|---|---|---|---|
| 2B | Cathodic | y = 20.314x - 0.0535 | 0.9992 | $2.2x10^{-15}$ |
| | Anodic | y = 16.55x - 0.0952 | 0.9805 | $1.4x10^{-15}$ |
| Com 2B | Cathodic | y = 9.2705x + 0.0021 | 0.9977 | $4.5x10^{-16}$ |
| | Anodic | y = 8.3691x- 0.0162 | 0.9933 | $3.7x10^{-16}$ |

These results show that the $D_{appLi+}$ value of the electrode 2B is higher than the $D_{appLi+}$ value of the electrode reference Com 2B in both cathodic (discharge) and anodic (charge) reactions.

Thus, these results show that the polymeric material obtained in example 2 improves the lithium diffusivity that essentially associated with the ionic conductivity within the electrode.

**d) Long cycling test**

The long cyclability test was performed by measuring the evolution of discharge capacity over 150 cycles at C/5 rate for electrodes comprising the electrode materials 2A-2D and Com 2A-Com 2D obtained in Example 5 or 7. The assembled cells were cycled in Galvanostatic cycling with potential limitation mode, with 5 cycles performed at each C rate, where 'C' is the exchange of 1 $Li^+$ or 1 electron in 1 hour. The results are represented in Figure 8.

In particular, Figure 8 represents the results of the evolution of discharge capacity upon cycle of the electrode and electrode reference comprising $LiFe_{0.4}Mn_{0.6}PO_4$ as positive electroactive material wherein,

- Fig 8A represents the results of the evolution of discharge capacity upon cycle of the electrodes comprising the electrode material 2A or Com 2A obtained in examples 5 and 7;
- Fig 8B represents the results of the evolution of discharge capacity upon cycle of the electrodes comprising the electrode material 2B or Com 2B obtained in examples 5 and 7;
- Fig 8C represents the results of the evolution of discharge capacity upon cycle of the electrodes comprising the electrode material 2C or Com 2C obtained in examples 5 and 7;
- Fig 8D represents the results of the evolution of discharge capacity upon cycle of the electrodes comprising the electrode material 2D or Com 2D obtained in examples 5 and 7;

These results show that besides enhancing kinetics, the polymeric material obtained in Example 2 ensures stable electrochemical performance over extended cycles of the resulting electrode.

In particular, when comparing the electrodes according to the invention with the electrode references, the results show that the electrodes according to the invention have at least similar, if not even better, stable electrochemical performance than the electrode references.

For instance, after 150 cycles at C/5, the electrode comprising the electrode material 2B still delivers 80 mAh/g whereas the electrode reference comprising the electrode material Com 2B delivers only 60 mAh/g.

Moreover, at higher active mass percentage, the discharge capacity of the reference electrode comprising the electrode material Com 2D drops to almost 0 mAh/g after 25 cycles, while for the electrode comprising the electrode material 2D the discharge capacity remains at 115 mAh/g after 125 cycles.

Therefore, these results show that the electrodes according to the invention have much better electrochemical performance than the electrode references, when the loading of electroactive material is high (at least 90 wt% relative to the total weight of the electrode material).

These results also show that those stable electrochemical performance is maintained for all electrodes comprising the polymeric material obtained in Example 2 at least over 150 cycles.

**Example 9: Electrochemical performance without carbon black**

Long range cyclability test was carried out for the electrode comprising the comparative electrode material Com 2F obtained in example 7, in which no carbon black was mixed to $LiFe_{0.4}Mn_{0.6}PO_4$ and PVDF. Similar as example 8d), the long cyclability test was performed by measuring the evolution of discharge capacity over 150 cycles at C/5, where 'C' is the exchange of 1$Li^+$ or 1 electron in 1 hour. The results are represented in Figure 9.

In particular, Figure 9 represents the results of the long cyclability test of the electrode reference comprising no carbon black and $LiFe_{0.4}Mn_{0.6}PO_4$ as positive electroactive material, wherein

- Fig 9A represents the Galvanostatic cycling with potential limitation (GCPL) results obtained for the electrode reference comprising the electrode material Com 2F obtained in Example 7;
- Fig 9B represents the evolution of the discharge capacity over 150 cycles performed at C/5 rates of the electrode reference comprising the electrode material Com 2F obtained in Example 7.

The results (Fig 9) show that electrochemical performance of the electrode reference was really poor, with a very big polarization and discharge capacity limited to 83.4 mAh/g for the first cycle at C/5 and an extremely rapid loss of capacity.

On the contrary, electrochemical performance of the electrodes 2A to 2D were still suitable for a use as battery over extended cycles (Fig 8) even if the positive electrode does not comprise carbon black.

These results show that the polymeric material obtained in example 2 enhances the electrical conductivity inside the electrode, which allows the electroactive material to operate properly. These results also show that the polymeric material obtained in example 2 is a suitable, even better, substitute to the mixture PVDF-carbon black.

These results also show that at the local scale of the electrodes according to the invention and whatever the C-rate, especially at high C-rates, charge compensation is achieved so that the mobility of the electrons is fast enough and possible all over the electrode. As a result, a homogeneous intercalation of lithium is achieved within the electrode comprising the polymeric material obtained in Example 2.

## Claims

1. An electrode material comprising at least one electroactive material and at least one polymeric material, wherein the polymeric material is ionic and electronic conductive.

2. The electrode material according to claim 1, wherein the amount of the polymeric material is greater than or equal to 2 wt%, preferably greater than or equal to 5 wt%, relative to the total weight of the electrode material.

3. The electrode material according to any one of the preceding claims, wherein the amount of the electroactive material is greater than or equal to 80 wt%, preferably greater than or equal to 84 wt%, more preferably greater than or equal to 85 wt%, relative to the total weight of the electrode material.

4. The electrode material according to any one of the preceding claims, wherein the weight ratio between the electroactive material and the polymeric material ranges from 84:16 to 98:2, preferably 84:16 to 95:5, more preferably between 84:16 to 94:6, still more preferably between 85:15 to 94:6.

5. The electrode material according to any one of the preceding claims, comprising at least one binder, the amount of the binder being lower than or equal to 7 wt%, preferably lower than or equal to 6 wt%, more preferably lower than or equal to 5 wt%, relative to the total weight of the electrode material.

6. The electrode material according to any one of the preceding claims, comprising a non-polymeric electronic conductive additive, the amount of the non-polymeric electronic conductive additive being lower than or equal to 5 wt%, preferably lower than or equal to 4 wt%, more preferably lower than or equal to 3 wt%, still more preferably lower than or equal to 2 wt%, relative to the total weight of the electrode material.

7. The electrode material according to any one of the preceding claims, wherein the polymeric material comprises:

   - a polymer A which is ionic conductive and a polymer B which is electronic conductive, the polymer B being different from the polymer A;
   - a polymer C which is both ionic and electronic conductive, the polymer C being different from the polymers A and B; or
   - mixtures thereof.

8. The electrode material according to claim 7, wherein the polymeric material comprises:

   - the polymer A and the polymer B, the polymer B being different from the polymer A, wherein the polymer A has an ionic conductivity greater than or equal to $10^{-7}$ S.cm$^{-1}$ and less than or equal to $10^{-3}$ S.cm$^{-1}$, preferably greater than or equal to $10^{-5}$ S.cm$^{-1}$ and less than or equal to $10^{-3}$ S.cm$^{-1}$, and the polymer B has an electronic conductivity greater than or equal to 50 S.cm$^{-1}$ and less than or equal to 500 S.cm$^{-1}$, preferably greater than or equal to 100

$S.cm^{-1}$ and less than or equal to 500 $S.cm^{-1}$, more preferably greater than or equal to 100 $S.cm^{-1}$ and less than or equal to 300 $S.cm^{-1}$;
- the polymer C which is both ionic and electronic conductive, the polymer C being different from the polymers A and B and having a total electrical conductivity greater than or equal to 100 $S.cm^{-1}$ and less than or equal to 500 $S.cm^{-1}$, more preferably greater than or equal to 100 $S.cm^{-1}$ and less than or equal to 300 $S.cm^{-1}$; or
- mixtures thereof.

**9.** The electrode material according to claim 7 or claim 8, wherein the polymers A and B of the polymeric material are linked together by non-covalent bonds, notably bonds selected among hydrogen bonds, electrostatic bonds and Van der Waals bonds.

**10.** The electrode material according to any one of claims 7 to 9, wherein the polymeric material is obtained by the polymerization of a composition comprising monomers of the polymer B and the polymer A, wherein the molar ratio between the monomers of the polymer B and the polymer A is from 25:75 to 50:50, preferably from 33:77 to 40:60.

**11.** The electrode material according to any one of claims 7 to 10, wherein the polymer A has at least one of the following characteristics:

- a molecular weight from around 30 kg/mol to around 350 kg/mol, preferably from around 100 to around 150 kg/mol;
- a dispersity from 1.1 to around 3.5, preferably from 1.8 to 2.5;
- a glass transition temperature equal to or greater than 40°C and equal to or less than 260°C at the heating rate of 10°C.$min^{-1}$, preferably equal to or greater than 220°C and equal to or less than 260°C at the heating rate of 10°C.$min^{-1}$;
- is homopoly(4-styrenesulfonyl(trifluoromethylsulfonyl)imide);
- is random copoly(styrene and 4-styrenesulfonyl(trifluoromethylsulfonyl)imide) with a molar ratio styrene: 4-styrenesulfonyl(trifluoromethylsulfonyl)imide of 50:50 or 75:25; or
- is random copoly(butyl acrylate and 3-sulfonyl(trifluoromethylsulfonyl) imide propyl acrylate) with a molar ratio butyl acrylate: 3-sulfonyl(trifluoromethylsulfonyl) imide propyl acrylate of 50:50.

**12.** The electrode material according to any one of claims 7 to 11, wherein the polymeric material has at least one of the following characteristics:

- the polymer A is poly(4-styrenesulfonyl(trifluoromethylsulfonyl)imide) and polymer B is poly(3,4-ethylenedioxythiophene);
- the polymeric material has a glass transition temperature from around 35°C to around 95°C at the heating rate of 10°C.$min^{-1}$;
- the water content in polymeric material is equal to or less than 1.5wt%, preferably greater than or equal to 0.8wt% and equal to or less than 1.5wt%, with the weight percentage wt% based on the total weight of the electrode material.

**13.** An electrode comprising at least one electrode material according to any one of claims 1 to 12.

**14.** A battery comprising at least one electrode according to claim 13.

**15.** A method of manufacturing an electrode material according to any one of claims 1 to 12, the method comprising at least one step of mixing the polymeric material with the electroactive material, thereby obtaining the electrode material, and optionally at least one step of pouring the obtained electrode material on a current collector.

Fig 1

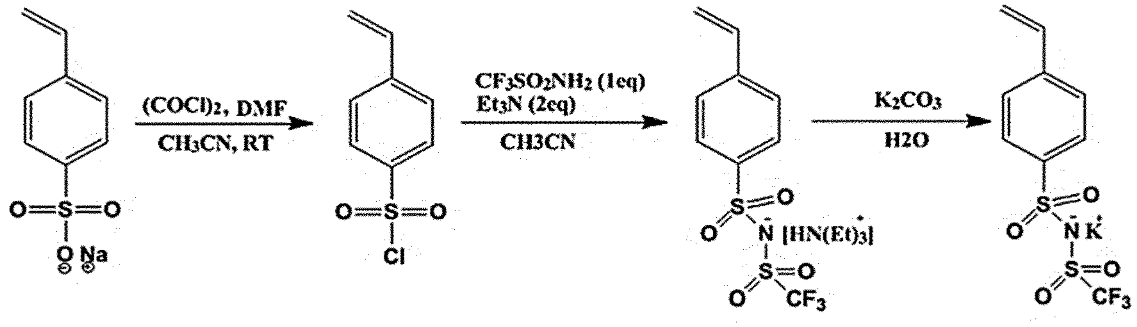
(COCl)2, DMF
CH3CN, RT
CF3SO2NH2 (1eq)
Et3N (2eq)
CH3CN
K2CO3
H2O

Fig 2

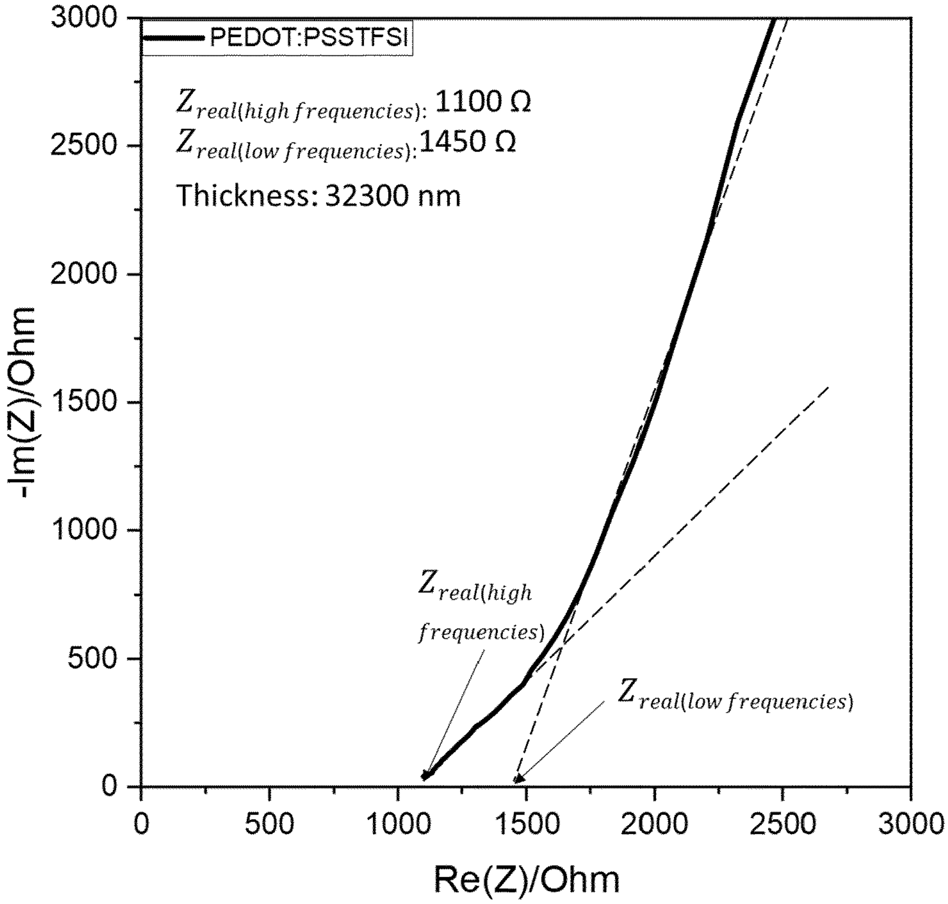
PEDOT:PSSTFSI
$Z_{real(high\,frequencies)}$: 1100 Ω
$Z_{real(low\,frequencies)}$: 1450 Ω
Thickness: 32300 nm
$Z_{real(high\,frequencies)}$
$Z_{real(low\,frequencies)}$
-Im(Z)/Ohm
Re(Z)/Ohm
0
500
1000
1500
2000
2500
3000

Fig 3

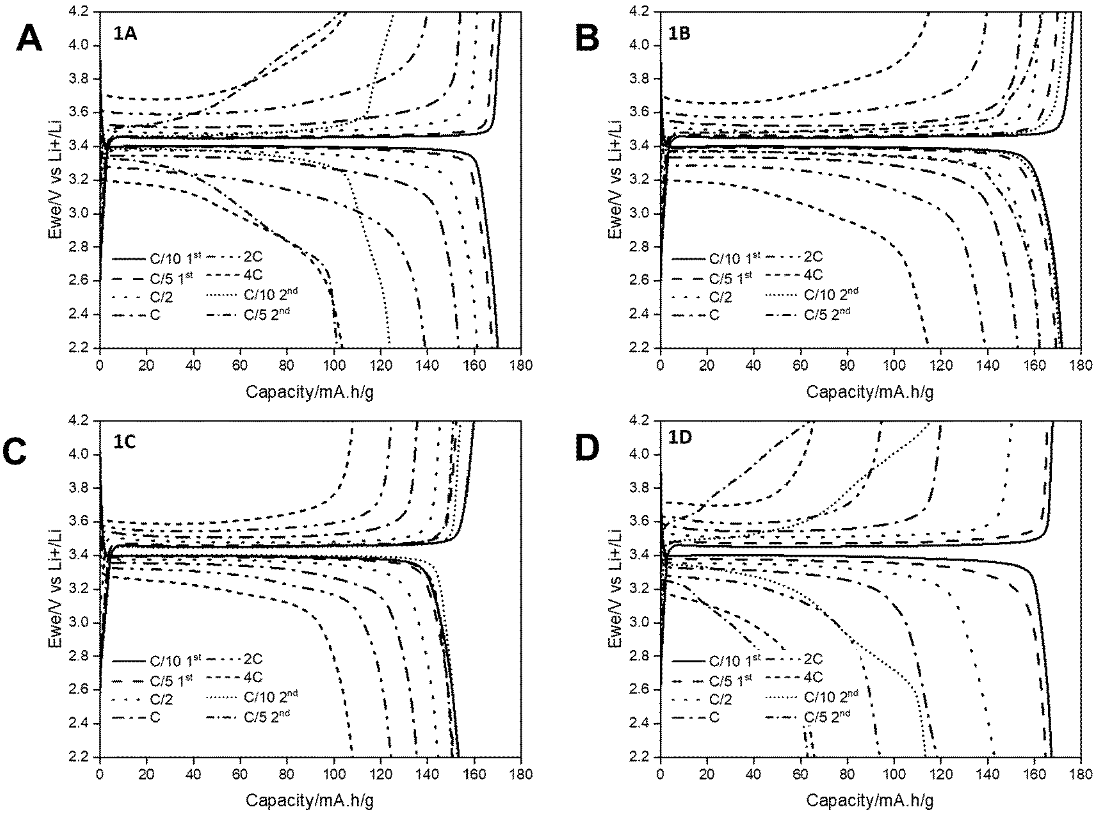
A
1A
B
1B
C
1C
D
1D
Ewe/V vs Li+/Li
Capacity/mA.h/g
C/10 1st
C/5 1st
C/2
C
2C
4C
C/10 2nd
C/5 2nd

Fig 4

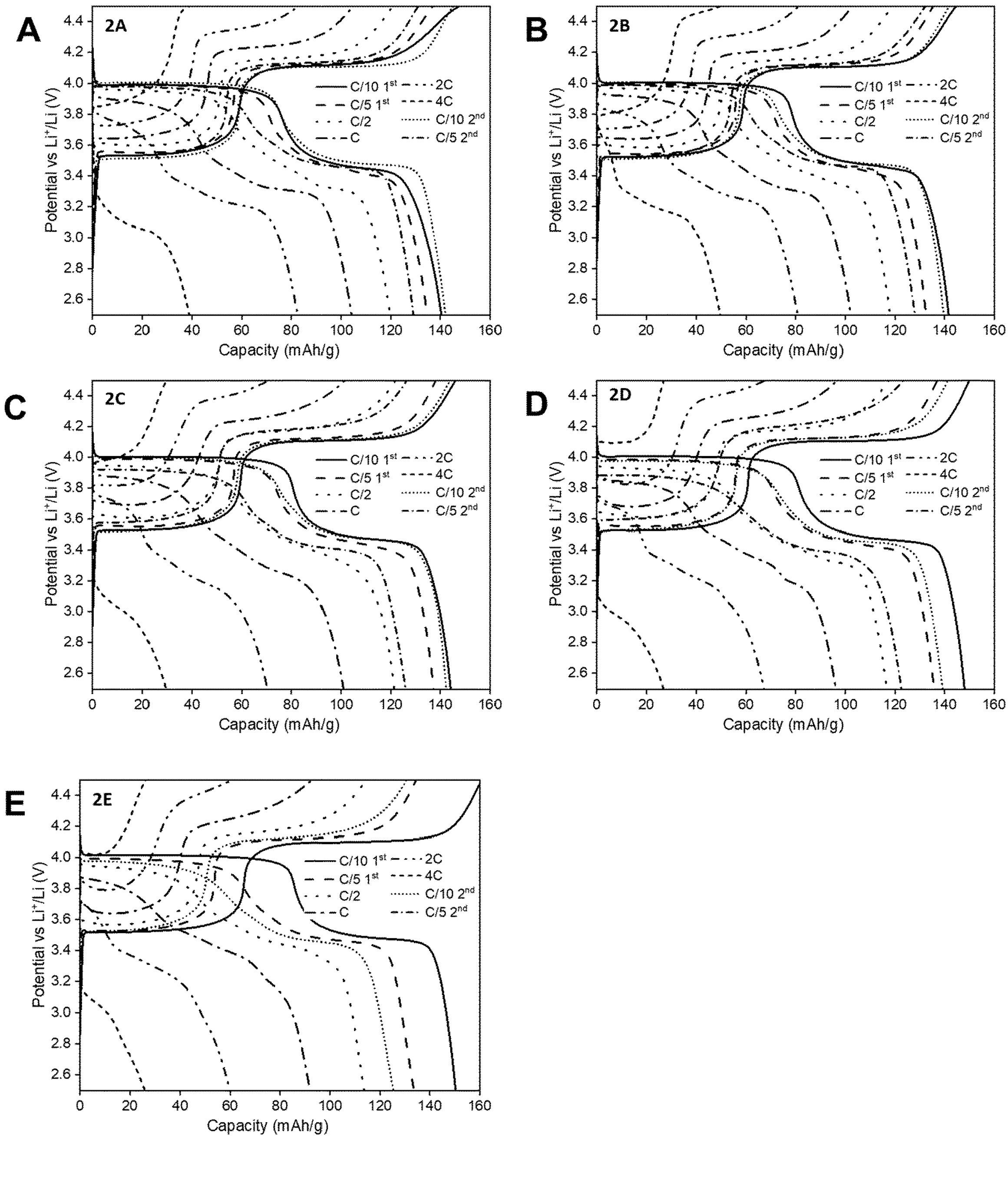
A
2A
B
2B
C
2C
D
2D
E
2E
C/10 1st
C/5 1st
C/2
C
2C
4C
C/10 2nd
C/5 2nd
Potential vs Li+/Li (V)
Capacity (mAh/g)

Fig 5

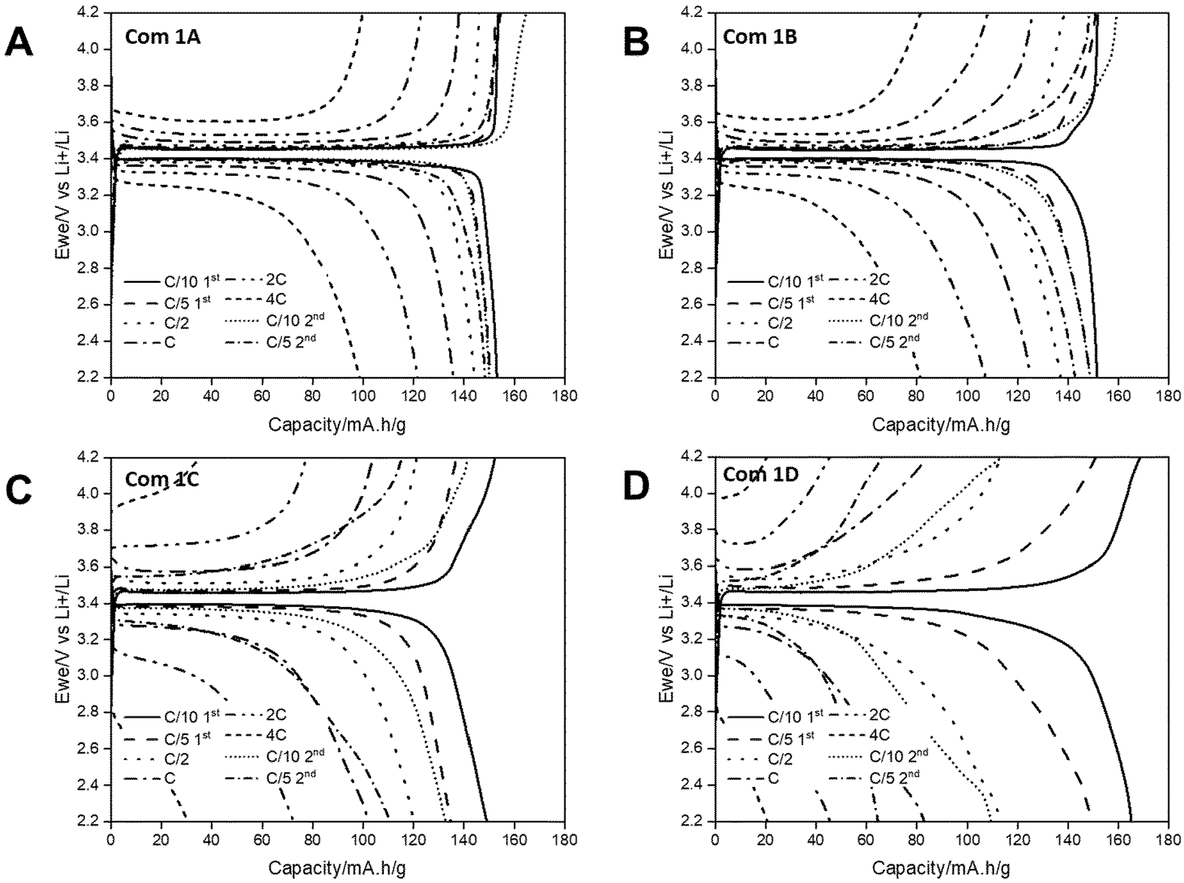
A
Com 1A
B
Com 1B
C
Com 1C
D
Com 1D
Ewe/V vs Li+/Li
Capacity/mA.h/g
C/10 1st
C/5 1st
C/2
C
2C
4C
C/10 2nd
C/5 2nd
4.2
4.0
3.8
3.6
3.4
3.2
3.0
2.8
2.6
2.4
2.2
0
20
40
60
80
100
120
140
160
180

Fig 6

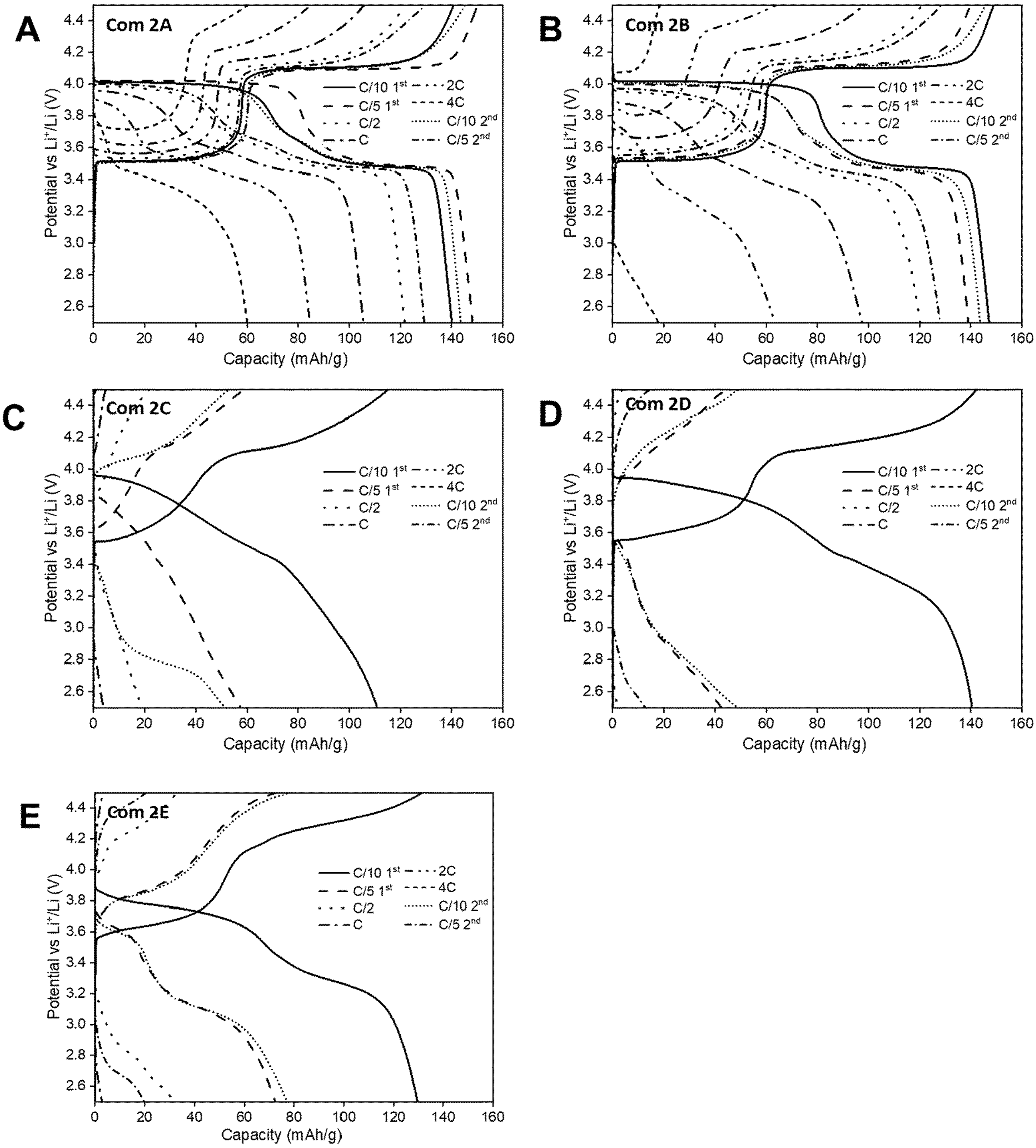
A
Com 2A
B
Com 2B
C
Com 2C
D
Com 2D
E
Com 2E
Potential vs Li⁺/Li (V)
Capacity (mAh/g)
C/10 1st
C/5 1st
C/2
C
2C
4C
C/10 2nd
C/5 2nd

Fig 7

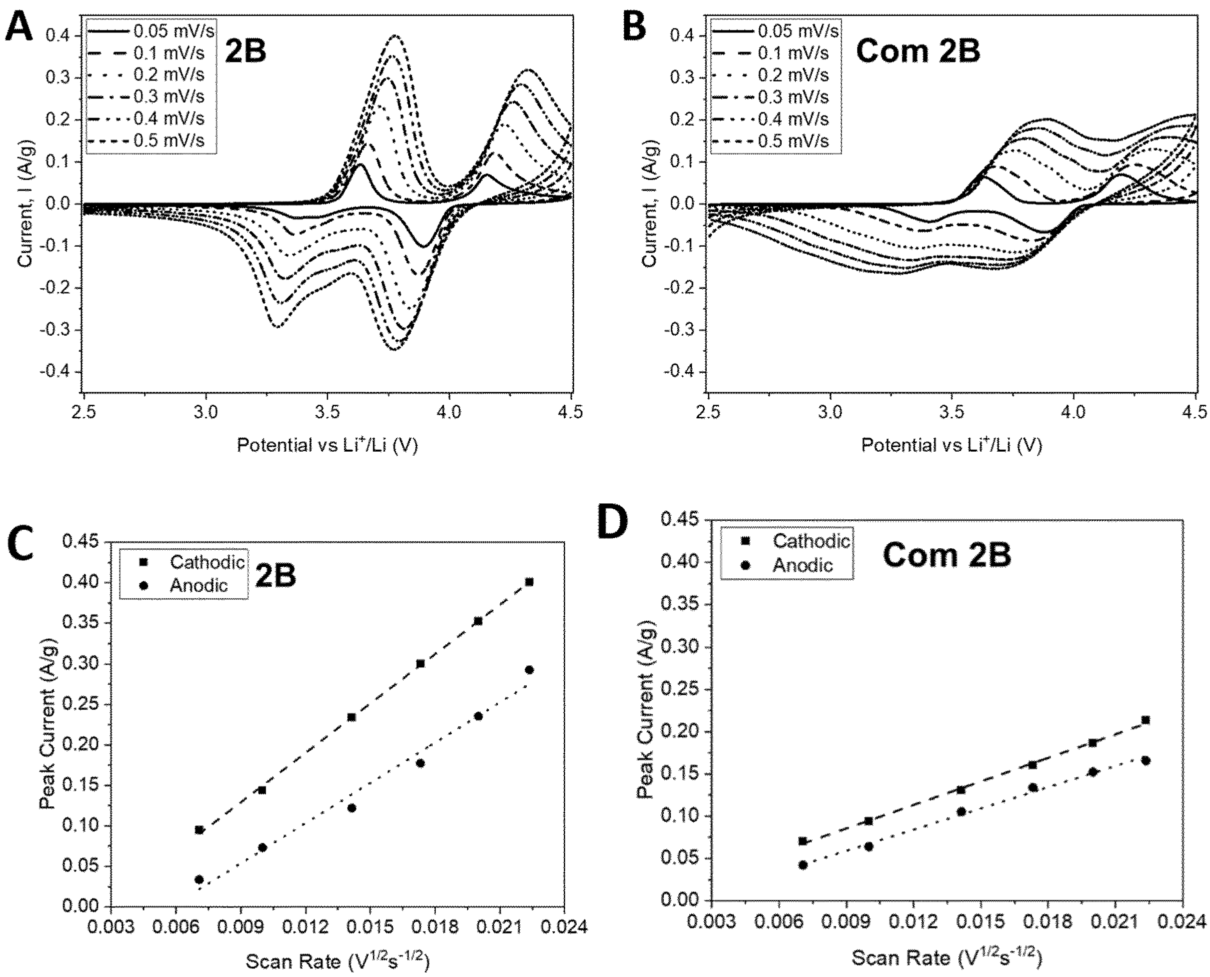
A
0.05 mV/s
0.1 mV/s
0.2 mV/s
0.3 mV/s
0.4 mV/s
0.5 mV/s
2B
Current, I (A/g)
Potential vs Li+/Li (V)
B
Com 2B
C
Cathodic
Anodic
Peak Current (A/g)
Scan Rate (V1/2s-1/2)
D

Fig 8

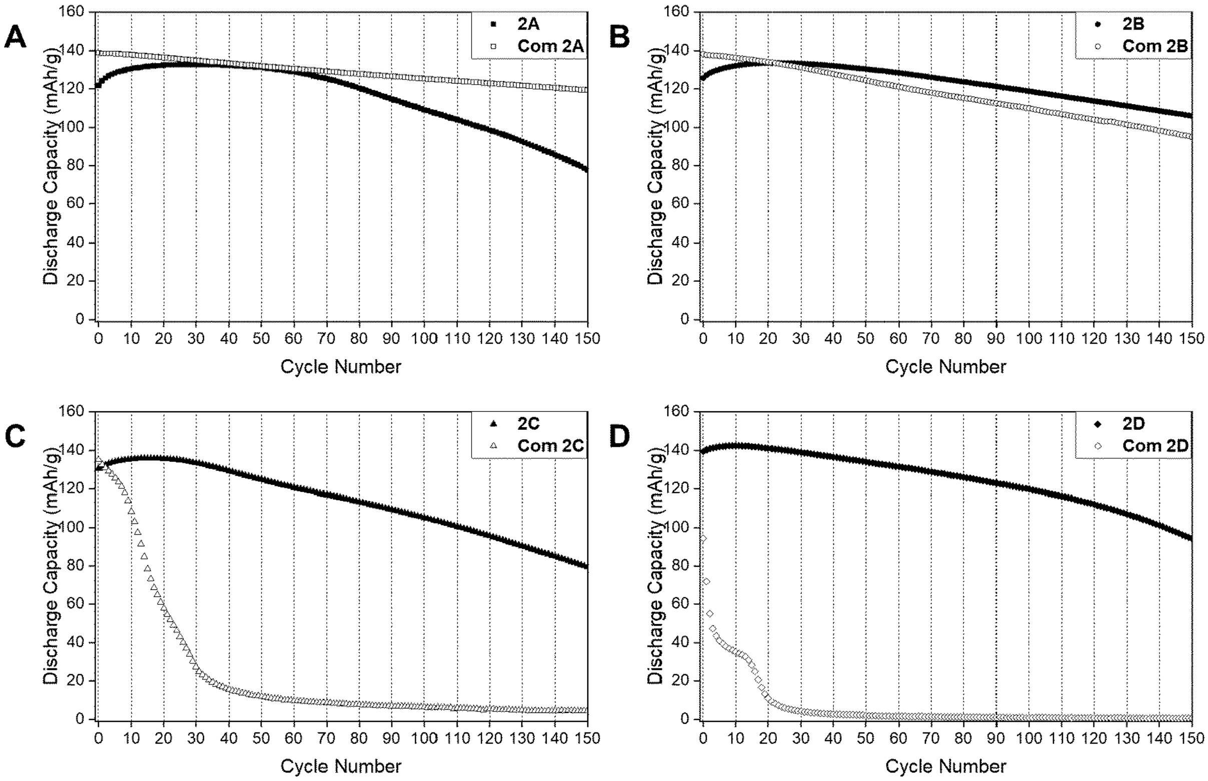
A
B
C
D
2A
Com 2A
2B
Com 2B
2C
Com 2C
2D
Com 2D
Discharge Capacity (mAh/g)
Cycle Number

Fig 9

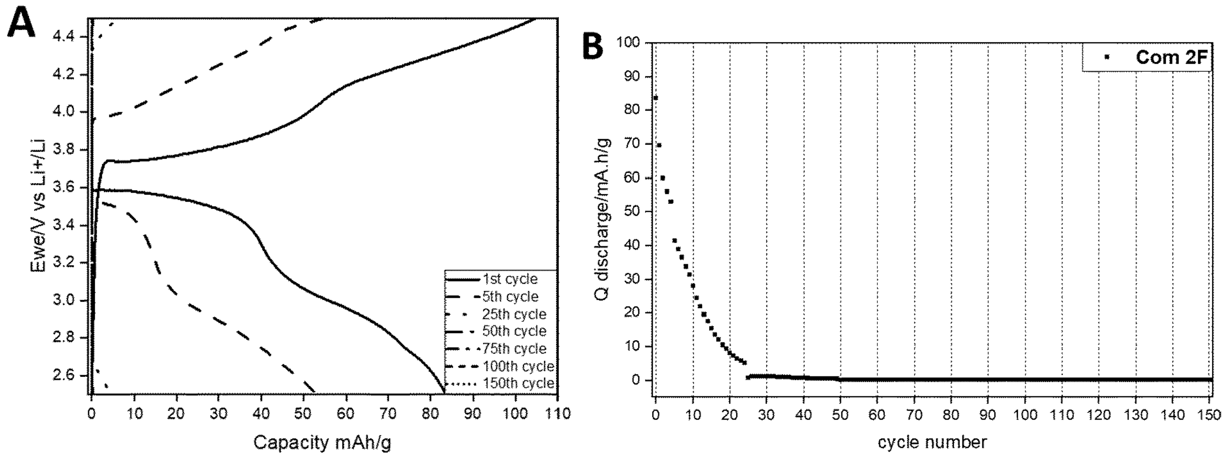
A
B
Ewe/V vs Li+/Li
Capacity mAh/g
1st cycle
5th cycle
25th cycle
50th cycle
75th cycle
100th cycle
150th cycle
Q discharge/mA.h/g
cycle number
Com 2F

Europäisches Patentamt
European Patent Office
Office européen des brevets

# EUROPEAN SEARCH REPORT

Application Number
EP 24 30 6055

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Casado-Perez Nera: "INNOVATIVE POLY (3,4-ETHYLENEDOXYTHIOPHENE) MATERIALS FOR ELECTROCHEMICAL ENERGY STORAGE", , 1 January 2017 (2017-01-01), pages 1-177, XP093085084, Retrieved from the Internet: URL:https://addi.ehu.es/bitstream/handle/10810/22847/TESIS_CASADO_PEREZ_NEREA.pdf [retrieved on 2023-09-22] * chapters 5.5, 5.7 * * figure 5.7 * ----- | 1-5 | INV. H01M4/136 H01M4/50 H01M4/52 H01M4/62 H01M10/0525 |
| X | US 11 302 924 B2 (MASSACHUSETTS INST TECHNOLOGY [US]) 12 April 2022 (2022-04-12) * abstract * * examples 1, 2, 6 * * column 6, lines 18-63 * ----- | 1,2,5 | |
| | | | TECHNICAL FIELDS SEARCHED (IPC) |
| | | | H01M |

The present search report has been drawn up for all claims

1

| Place of search | Date of completion of the search | Examiner |
|---|---|---|
| The Hague | 6 December 2024 | Lange, Ronny |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

Europäisches Patentamt
European Patent Office
Office européen des brevets

Application Number
EP 24 30 6055

## CLAIMS INCURRING FEES

The present European patent application comprised at the time of filing claims for which payment was due.

- [ ] Only part of the claims have been paid within the prescribed time limit. The present European search report has been drawn up for those claims for which no payment was due and for those claims for which claims fees have been paid, namely claim(s):

- [ ] No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

- [ ] All further search fees have been paid within the fixed time limit. The present European search report has been drawn up for all claims.

- [ ] As all searchable claims could be searched without effort justifying an additional fee, the Search Division did not invite payment of any additional fee.

- [ ] Only part of the further search fees have been paid within the fixed time limit. The present European search report has been drawn up for those parts of the European patent application which relate to the inventions in respect of which search fees have been paid, namely claims:

- [X] None of the further search fees have been paid within the fixed time limit. The present European search report has been drawn up for those parts of the European patent application which relate to the invention first mentioned in the claims, namely claims:

  2-5(completely); 1(partially)

- [ ] The present supplementary European search report has been drawn up for those parts of the European patent application which relate to the invention first mentioned in the claims (Rule 164 (1) EPC).

Europäisches Patentamt
European Patent Office
Office européen des brevets

# LACK OF UNITY OF INVENTION SHEET B

Application Number
EP 24 30 6055

The Search Division considers that the present European patent application does not comply with the requirements of unity of invention and relates to several inventions or groups of inventions, namely:

1. claims: 2-5(completely); 1(partially)

Inventive concept I regards a An electrode material comprising at least one electroactive material and at least one polymeric material, wherein the polymeric material is ionic and electronic conductive and/or wherein the amount of the polymeric material is greater than or equal to 2 wt%, preferably greater than or equal to 5 wt%, relative to the total weight of the electrode material and comprising at least one binder, the amount of the binder being lower than or equal to 7 wt%, preferably lower than or equal to 6 wt%, more preferably lower than or equal to 5 wt%, relative to the total weight of the electrode material.

---

2. claims: 6, 13-15(completely); 1(partially)

Inventive concept II regards an electrode material comprising at least one electroactive material and at least one polymeric material, wherein the polymeric material is ionic and electronic conductive further comprising a non-polymeric electronic conductive additive, the amount of the non-polymeric electronic conductive additive being lower than or equal to 5 wt%, preferably lower than or equal to 4 wt%, more preferably lower than or equal to 3 wt%, still more preferably lower than or equal to 2 wt%, relative to the total weight of the electrode material.
Inventive concept II also concerns the respective electrode, battery and method.

---

3. claims: 7-12(completely); 1(partially)

Inventive concept III regards an electrode material comprising at least one electroactive material and at least one polymeric material, wherein the polymeric material is ionic and electronic conductive, wherein the polymeric material comprises: - a polymer A which is ionic conductive and a polymer B which is electronic conductive, the polymer B being different from the polymer A; - a polymer C which is both ionic and electronic conductive, the polymer C being different from the polymers A and B; or - mixtures thereof and preferably wherein the polymeric material comprises: the polymer A and the polymer B, the polymer B being different from the polymer A, wherein the polymer A has an ionic conductivity greater than or equal to 10-7 S.cm-1 and less than or equal to 10-3 S.cm-1 , preferably greater than or equal to 10-5 S.cm-1 and less than or equal to 10-3 S.cm-1 , and the polymer B has an electronic conductivity greater than or equal to 50 S.cm-1 and less than or equal to 500 S.cm-1 , preferably greater than or equal to 100 S.cm-1 and

Europäisches Patentamt
European Patent Office
Office européen des brevets

# LACK OF UNITY OF INVENTION SHEET B

Application Number
EP 24 30 6055

The Search Division considers that the present European patent application does not comply with the requirements of unity of invention and relates to several inventions or groups of inventions, namely:

less than or equal to 500 S.cm-1 , more preferably greater than or equal to 100 S.cm-1 and less than or equal to 300 S.cm-1 ;- the polymer C which is both ionic and electronic conductive, the polymer C being different from the polymers A and B and having a total electrical conductivity greater than or equal to 100 S.cm-1 and less than or equal to 500 S.cm-1 , more preferably greater than or equal to 100 S.cm-1 and less than or equal to 300 S.cm-1 ; or mixtures thereof.

---

# ANNEX TO THE EUROPEAN SEARCH REPORT ON EUROPEAN PATENT APPLICATION NO. EP 24 30 6055

This annex lists the patent family members relating to the patent documents cited in the above-mentioned European search report.
The members are as contained in the European Patent Office EDP file on
The European Patent Office is in no way liable for these particulars which are merely given for the purpose of information.

06-12-2024

| Patent document cited in search report | Publication date | Patent family member(s) | Publication date |
|---|---|---|---|
| US 11302924 B2 | 12-04-2022 | US 2020052300 A1 | 13-02-2020 |
| | | WO 2018075469 A1 | 26-04-2018 |

EPO FORM P0459

For more details about this annex : see Official Journal of the European Patent Office, No. 12/82